# EUROPEAN PATENT SPECIFICATION

(11) **EP 4 519 691 B1**
(45) Date of publication and mention of the grant of the patent: **23.09.2026**
(21) Application number: 23723860.5
(22) Date of filing: 28.04.2023
(51) Int. Cl.: G01N 35/00, G01N 30/06, G01N 35/10, G01N 1/38, G01N 30/72

(54) **METHOD FOR DETERMINING A DILUTION FACTOR OF A SAMPLE**
VERFAHREN ZUR BESTIMMUNG EINES VERDÜNNUNGSFAKTORS EINER PROBE
PROCÉDÉ DE DÉTERMINATION D'UN FACTEUR DE DILUTION D'UN ÉCHANTILLON

(30) Priority: 02.05.2022 EP 22171214
(43) Date of publication of application: 12.03.2025
(73) Proprietor: F. Hoffmann-La Roche AG, 4070 Basel (CH); Roche Diagnostics GmbH, 68305 Mannheim (DE)
(72) Inventor: VONDENHOFF, Gaston Hubertus Maria, 81477 München Süd (DE)
(74) Representative: Altmann Stößel Dick Patentanwälte PartG mbB
(86) International application number: PCT/EP2023/061220
(87) International publication number: WO 2023/213702

(56) References cited:
- US-A1- 2020 064 236

## Description

### Technical Field

The invention relates to a method for determining a dilution factor of a sample comprising an analyte of interest, a method for determining a concentration of an analyte of interest in a sample, and an in vitro diagnostic medical device, computer programs and computer program products.

### Background art

To quantify an analyte from a sample it is necessary to use a defined volume of calibrator and sample. Although the volume between calibrator and sample may vary, it is required to know both volumes so that dilution factors can be calculated and considered in the determination of the analyte concentration. Ideally however, the analytical method uses the same calibrator volume and sample volume.

To use a defined sample volume that is required for analysis, it is necessary to transfer, e.g. to pipet, this volume in a vessel or chamber where the analysis is performed or from which further steps are performed (e.g. sample preparation). Alternatively, a defined sample volume is submitted onto a chromatographic or direct detection system or a system where both are connected (e.g. LC-MS/MS or LC-UV). The critical point is that these systems have to be calibrated and the volumes of both calibrators and samples need to be known.

Sometimes the sample cannot be pipetted because it is a solid. Or, in other cases, the sample cannot be pipetted accurately e.g. because it is a volatile solution, a viscous material or suspension (e.g. whole blood). Alternatively, one may prefer not to pipet the sample because this saves one step in the analysis of the sample, and therefore an error contribution in the analysis is prevented. Another reason may be the presence of infectious pathogens in the sample.

WO2021094409 A1 describes derivatization of antibiotic analytes as well as methods of determining the amount or concentration of derivatized antibiotic analytes in an obtained sample.

US 2020/064236 A1 regards determination of dilution factor of an analyte.

### Problem to be solved

It is therefore an objective of the present invention to provide a method for determining a concentration of an analyte of interest in a sample, a method for determining a concentration of an analyte of interest in a sample, and an in vitro diagnostic medical device, computer programs and computer program products, which avoid the above-described disadvantages of known methods, devices, computer programs and computer program products. In particular, the method and devices shall allow determining of analyte concentration even in case of unknown sample volume.

### Summary

This problem is addressed by a method for determining a concentration of an analyte of interest in a sample, a method for determining a concentration of an analyte of interest in a sample, and an in vitro diagnostic medical device, computer programs and computer program products with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the present invention, a method for determining a dilution factor of a sample comprising an analyte of interest is disclosed.

The method may be computer-implemented. The term "computer implemented" as used herein is a broad term and is to be given its ordinary and customary meaning to a person of ordinary skill in the art and is not to be limited to a special or customized meaning. The term specifically may refer, without limitation, to a method involving at least one computer and/or at least one computer network. The computer and/or computer network may comprise at least one processor which is configured for performing at least one of the method steps of the method according to the present invention. Preferably each of the method steps is performed by the computer and/or computer network. The method may be performed completely automatically, such as without user interaction. The term "automatically" as used herein is a broad term and is to be given its ordinary and customary meaning to a person of ordinary skill in the art and is not to be limited to a special or customized meaning. The term specifically may refer, without limitation, to a process which is performed completely by means of at least one computer and/or computer network and/or machine, in particular without manual action and/or interaction with a user.

The method steps and/or substeps of the method steps may, for example, be performed in the given order. However, a different order may also be possible. The method may further comprise additional method steps, which are not listed. Further, one or more or even all of the method steps and/or the substeps, may be performed only once or repeatedly.

The method comprises the following steps:
a) preparing a mixture by diluting defined volumes of calibrators comprising the analyte of interest with a defined volume of a dilution reagent comprising at least one first internal standard ISTDa;
b) performing at least one sample preparation workflow on a defined volume of the mixture thereby generating a prepared mixture, wherein the sample preparation workflow comprises adding at least one second internal standard ISTDb;
c) performing at least one sample measurement on the prepared mixture comprising determining a peak area for each of the first internal standard ISTDa and the second internal standard ISTDb using an in vitro diagnostic medical device and determining an area ratio ARₛₐₘₚₗₑ of ISTDa and ISTDb by using at least one processing device;
d) performing at least one calibration measurement on a plurality of calibration samples, wherein the calibration samples have a predefined concentration of ISTDa and ISTDb, and determining an averaged area ratio AR_{calibration,av} of ISTDa and ISTDb of the calibration samples by using the processing device;
e) determining the dilution factor by determining a deviation of the area ratio ARₛₐₘₚₗₑ and the averaged area ratio AR_{calibration,av} by using the processing device.

The term "in vitro diagnostic medical device" (IVD MD) as used herein is a broad term and is to be given its ordinary and customary meaning to a person of ordinary skill in the art and is not to be limited to a special or customized meaning. The term specifically may refer, without limitation, to a medical device, whether used alone or in combination, which is configured for in vitro examination of at least one sample derived from the human body, and/or configured for providing information for diagnostic, monitoring or compatibility purposes. The in vitro diagnostic medical device may comprise one or more of at least one reagent, at least one calibrator, at least one control material, at least one specimen receptacle, software, related instruments or apparatus or other articles. For example, the in vitro diagnostic medical device may be one or more of a mass spectrometry device, a device configured for immunodiagnostics, a device configured for performing a measurement technique using one or more of quantitative nuclear magnetic resonance (qNMR), liquid chromatography-ultraviolet (LC-UV), luminescence, bioluminescence, electrochemiluminescence, colorimetric, turbidity, absorption, calorimetry, fluorescence, phosphorescence, and the like.

The in vitro diagnostic medical device may be a mass spectrometry device. The term "mass spectrometry" as used herein is a broad term and is to be given its ordinary and customary meaning to a person of ordinary skill in the art and is not to be limited to a special or customized meaning. The term specifically may refer, without limitation, to an analytical technique for determining a mass-to-charge ratio of ions. The mass spectrometry may be performed using at least one mass spectrometry device. As used herein, the term "mass spectrometry device", also denoted "mass analyzer", is a broad term and is to be given its ordinary and customary meaning to a person of ordinary skill in the art and is not to be limited to a special or customized meaning. The term specifically may refer, without limitation, to an analyzer configured for detecting at least one analyte based on the mass-to-charge ratio.

The mass analyzer may be or may comprise at least one quadrupole mass analyzer. As used herein, the term "quadrupole mass analyzer" is a broad term and is to be given its ordinary and customary meaning to a person of ordinary skill in the art and is not to be limited to a special or customized meaning. The term specifically may refer, without limitation, to a mass analyzer comprising at least one quadrupole as mass filter. The quadrupole mass analyzer may comprise a plurality of quadrupoles. For example, the quadrupole mass analyzer may be a triple quadrupole mass spectrometer. As used herein, the term "mass filter" is a broad term and is to be given its ordinary and customary meaning to a person of ordinary skill in the art and is not to be limited to a special or customized meaning. The term specifically may refer, without limitation, to a device configured for selecting ions injected to the mass filter according to their mass-to-charge ratio m/z. The mass filter may comprise two pairs of electrodes. The electrodes may be rod-shaped, e.g. cylindrical. In ideal case, the electrodes may be hyperbolic. The electrodes may be designed identical. The electrodes may be arranged in parallel extending along a common axis, e.g. a z axis. The quadrupole mass analyzer may comprise at least one power supply circuitry configured for applying at least one direct current (DC) voltage and at least one alternating current (AC) voltage between the two pairs of electrodes of the mass filter. The power supply circuitry may be configured for holding each opposing electrode pair at identical potential. The power supply circuitry may be configured for changing sign of charge of the electrode pairs periodically such that stable trajectories are only possible for ions within a certain mass-to-charge ratio m/z. Trajectories of ions within the mass filter can be described by the Mathieu differential equations. For measuring ions of different m/z values DC and AC voltage may be changed in time such that ions with different m/z values can be transmitted to a detector of the mass spectrometry device.

The mass spectrometry device may further comprise at least one ionization source. As used herein, the term "ionization source", also denoted as "ion source", is a broad term and is to be given its ordinary and customary meaning to a person of ordinary skill in the art and is not to be limited to a special or customized meaning. The term specifically may refer, without limitation, to a device configured for generating ions, e.g. from neutral gas molecules. The ionization source may be or may comprise at least one source selected from the group consisting of: at least one gas phase ionization source such as at least one electron impact (EI) source or at least one chemical ionization (CI) source; at least one desorption ionization source such as at least one plasma desorption (PDMS) source, at least one fast atom bombardment (FAB) source, at least one secondary ion mass spectrometry (SIMS) source, at least one laser desorption (LDMS) source, and at least one matrix assisted laser desorption (MALDI) source; at least one spray ionization source such as at least one thermospray (TSP) source, at least one atmospheric pressure chemical ionization (APCI) source, at least one electrospray (ESI), and at least one atmospheric pressure ionization (API) source.

The mass spectrometry device may comprise at least one detector. As used herein, the term "detector", is a broad term and is to be given its ordinary and customary meaning to a person of ordinary skill in the art and is not to be limited to a special or customized meaning. The term specifically may refer, without limitation, to an apparatus configured for detecting incoming ions. The detector may be configured for detecting charged particles. The detector may be or may comprise at least one electron multiplier. The mass spectrometry device, e.g. the detector and/or at least one processing unit of the mass spectrometry device, may be configured to determine at least one mass spectrum of the detected ions. As used herein, the term "mass spectrum" is a broad term and is to be given its ordinary and customary meaning to a person of ordinary skill in the art and is not to be limited to a special or customized meaning. The term specifically may refer, without limitation, to a two dimensional representation of signal intensity vs the charge-to-mass ratio m/z, wherein the signal intensity corresponds to abundance of the respective ion. The mass spectrum may be a pixelated image. For determining resulting intensities of pixels of the mass spectrum, signals detected with the detector within a certain m/z range may be integrated. The analyte in the sample may be identified by the processing unit. The processing unit may be configured for correlating known masses to the identified masses or through a characteristic fragmentation pattern.

The mass spectrometry device may be or may comprise a liquid chromatography mass spectrometry device. The mass spectrometry device may be connected to and/or may comprise at least one liquid chromatograph. The liquid chromatograph may be used as sample preparation for the mass spectrometry device. Other embodiments of sample preparation may be possible, such as at least one gas chromatograph. As used herein, the term "liquid chromatography mass spectrometry device" is a broad term and is to be given its ordinary and customary meaning to a person of ordinary skill in the art and is not to be limited to a special or customized meaning. The term specifically may refer, without limitation, to a combination of liquid chromatography with mass spectrometry. The mass spectrometry device may comprise at least one liquid chromatograph. The liquid chromatography mass spectrometry device may be or may comprise at least one high performance liquid chromatography (HPLC) device or at least one micro liquid chromatography (µLC) device. The liquid chromatography mass spectrometry device may comprise a liquid chromatography (LC) device and a mass spectrometry (MS) device, in the present case the mass filter, wherein the LC device and the mass filter are coupled via at least one interface. The interface coupling the LC device and the MS device may comprise the ionization source configured for generating of molecular ions and for transferring of the molecular ions into the gas phase. The interface may further comprise at least one ion mobility module arranged between the ionization source and the mass filter. For example, the ion mobility module may be a high-field asymmetric waveform ion mobility spectrometry (FAIMS) module.

As used herein, the term "liquid chromatography (LC) device" is a broad term and is to be given its ordinary and customary meaning to a person of ordinary skill in the art and is not to be limited to a special or customized meaning. The term specifically may refer, without limitation, to an analytical module configured to separate one or more analytes of interest of a sample from other components of the sample for detection of the one or more analytes with the mass spectrometry device. The LC device may comprise at least one LC column. For example, the LC device may be a single-column LC device or a multi-column LC device having a plurality of LC columns. The LC column may have a stationary phase through which a mobile phase is pumped in order to separate and/or elute and/or transfer the analytes of interest. The liquid chromatography mass spectrometry device may further comprise a sample preparation station for the automated pre-treatment and preparation of samples each comprising at least one analyte of interest.

The term "measurement", "measuring" or "determining" preferably comprises a qualitative, a semi-quanitative or a quantitative measurement.

The term "analyte of interest", also denoted as "analyte", as used herein, is a broad term and is to be given its ordinary and customary meaning to a person of ordinary skill in the art and is not to be limited to a special or customized meaning. The term specifically may refer, without limitation, to chemical species to be analysed such as any chemical compound or group of compounds which shall be determined in a sample. The terms "analyte", "analyte molecule", or "analyte(s) of interest" are used interchangeably. The analyte may be any kind of molecule present in a sample. In an embodiment, the analyte is a macromolecule, i.e. a compound with a molecular mass of more than 2500 u (i.e. more than 2.5 kDa). In a further embodiment, the analyte is a biological macromolecule, in particular a polypeptide, a polynucleotide, a polysaccharide, or a fragment of any of the aforesaid. In an embodiment, the analyte is a small molecule chemical compound, i.e. a compound with a molecular mass of at most 2500 u (2.5 kDa), in an embodiment at most 1.5 kDa, in a further embodiment at most 1 kDa. The analyte may be any chemical compound of interest; in an embodiment the analyte is a chemical compound metabolized by a body of a subject, is a compound administered to a subject in order to induce a change in the subject's metabolism, is a chemical compound of interest in technical process, e.g. an educt, an intermediate, or a product, is a chemical compound of interest in an environmental sample, or the like. In an embodiment, the analyte is a chemical compound metabolized by a body of a subject, in particular of a human subject, or is a compound administered to a subject in order to induce a change in the subject's metabolism. Thus, in an embodiment, the analyte is a drug of abuse or a metabolite thereof, e.g. amphetamine; cocaine; methadone; ethyl glucuronide; ethyl sulfate; an opiate, in particular buprenorphine, 6-monoacatylmorphine, codeine, dihydrocodeine, morphine, morphine-3-glucuronide, and/or tramadol; and/or an opioid, in particular acetylfentanyl, car-fentanil, fentanyl, hydrocodone, norfentanyl, oxycodone, and/or oxymorphone. In an embodiment, the analyte is a therapeutic drug, e.g. valproic acid; clonazepam; methotrexate; voriconazole; mycophenolic acid (total); mycophenolic acid-glucuronide; acetaminophen; salicylic acid; theophylline; digoxin; an immuno suppressant drug, in particular cyclosporine, everolimus, sirolimus, and/or tacrolimus; an analgesic, in particular meperidine, normeperidine, tramadol, and/or O-desmethyl-tramadol; an antibiotic, in particular gentamycin, tobramycin, amikacin, vancomycin, piperacilline (tazobactam), meropenem, and/or linezolid; an antieplileptic, in particular phenytoin, valporic acid, free phenytoin, free valproic acid, levetiracetam, carbamazepine, carbamazepine-10,11-epoxide, phenobarbital, primidone, gabapentin, zonisamid, lamotrigine, and/or topiramate. In an embodiment, the analyte is a hormone, in particular cortisol, estradiol, progesterone, testosterone, 17-hydroxyprogesterone, aldosterone, dehydroepiandrosteron (DHEA), dehydroepiandrosterone sulfate (DHEA-S), dihydrotestosterone, and/or cortisone; in an embodiment, the sample is a serum or plasma sample and the analyte is cortisol, DHEA-S, estradiol, progesterone, testosterone, 17-hydroxyprogesterone, aldosterone, DHEA, dihydrotestosterone, and/or cortisone; in an embodiment, the sample is a saliva sample and the analyte is cortisol, estradiol, progesterone, testosterone, 17-hydroxyprogesterone, androstendione, and/or cortisone; in an embodiment, the sample is a urine sample and the analyte is cortisol, aldosterone, and/or cortisone. In an embodiment, the analyte is a vitamin, in an embodiment vitamin D, in particular ergocalciferol (Vitamin D2) and/or cholecalciferol (Vitamin D3) or a derivative thereof, e.g. 25-hydroxy-vitamine-D2, 25-hydroxy-vitamine-D3, 24,25-dihydroxy-vitamine-D2, 24,25-dihydroxy-vitamine-D3, 1,25-dihydroxy-vitamine-D2, and/or 1,25-dihydroxy-vitamine-D3. In a further embodiment, the analyte is a metabolite of a subject.

In an embodiment, the analyte is an antibiotic or a lactone analyte. Antibiotics may be substance active against microbial organisms. Antibiotics are commonly classified based on their mechanism of action, chemical structure, or spectrum of activity. One class of antibiotics are β-lactam antibiotics. β-lactam antibiotics (beta-lactam antibiotics) may be all antibiotic agents that contain a beta-lactam ring in their molecular structures. These include but are not limited to penicillin derivatives (penams), cephalosporins (cephems), monobactams, carbapenems and carbacephems. Most β-lactam antibiotics work by inhibiting cell wall biosynthesis in the bacterial organism and are the most widely used group of antibiotics. The effectiveness of these antibiotics relies on their ability to reach the PBP intact and their ability to bind to the penicillin binding proteins (PBP). The term "lactone analyte", as used herein, relates to a chemical molecule comprising at least one lactone group, i.e. an intramolecular ester group. Corresponding compounds are known to the skilled person. In an embodiment, the lactone analyte is a macrocyclic lactone comprising an at least eight-membered lactone ring, in an embodiment an at least twelve-membered lactone ring. In an embodiment, the lactone analyte comprises an at least 5-membered lactone ring; in a further embodiment, the lactone analyte comprises a lactone ring comprises of from 5 to 50 ring atoms, in an embodiment of from 12 to 40 ring atoms, in a further embodiment of from 15 to 35 ring atoms. In an embodiment, the lactone analyte comprises a 20, 21, 22, 23, 24, 25, 26, 27, 28, 29, 30, 31, 32, 33, 34, or 35-membered lactone ring. In an embodiment, the lactone analyte is a macrolide, in a further embodiment is an immunomodulatory macrolide, an antibiotic macrolide, an antimycotic macrolide, or a mycotoxin macrolide. In an embodiment, the lactone analyte is an immunomodulatory macrolide.

The term "immunomodulatory macrolide", as used herein, relates to a lactone analyte, in an embodiment a macrolide, as specified herein above having the property of modulating the immune response of a subject. In an embodiment, said modulation is a suppression; thus, in an embodiment, the immunomodulatory macrolide is an immune-suppressive compound of the macrolide class of compounds, i.e. is a macrolide immunosuppressant. In an embodiment, the immunomodulatory macrolide is a compound inhibiting T lymphocyte activation; means and methods for determining such activity are known to the skilled person. In an embodiment, the immunomodulatory macrolide is comprised in a sample, in particular a sample of a body fluid, at a concentration of from 1 ng/ml to 15 µg/ml, in an embodiment of from 5 ng/ml to 1 µg/ml, in a further embodiment of from 7.5 ng/ml to 500 ng/ml, in a further embodiment of from 10 ng/ml to 250 ng/ml. In an embodiment, the lactone analyte is Everolimus (CAS-number 159351-69-6), Sirolimus (CAS number 53123-88-9, Tacrolimus (CAS number 104987-11-3), Pimecrolimus (CAS number 137071-32-0), or Temsirolimus (CAS number 162635-04-3). In an embodiment, the lactone analyte is selected from Everolimus, Sirolimus, Tacrolimus, Pimecrolimus and Temsirolimus, in an embodiment is selected from Everolimus, Sirolimus, and Tacrolimus, in a further embodiment is Everolimus, in an embodiment is Sirolimus, in an embodiment is Tacrolimus.

As used herein, the term "sample" is a broad term and is to be given its ordinary and customary meaning to a person of ordinary skill in the art and is not to be limited to a special or customized meaning. In an embodiment the term as used herein refers to any composition of matter suspected or known to comprise at least one analyte of interest. The terms "sample" or "sample of interest" are used interchangeably herein.

In an embodiment, the sample is a sample of a subject, in an embodiment of a patient; in an embodiment, the sample is an isolated sample from a subject. In an embodiment, the sample is or comprises a sample of a body fluid, a sample from a tissue or an organ, or a sample of wash/rinse fluid or a swab or smear obtained from an outer or inner body surface. The sample may be and/or may comprise a part or piece of a tissue, organ or individual, typically being smaller than such tissue, organ or individual, intended to represent the whole of the tissue, organ or individual. Upon analysis, a sample may provide information about the tissue status or the health or diseased status of an organ or individual. In an embodiment, the sample is or comprises a sample of a body fluid, a sample from a tissue or an organ, or a sample of wash/rinse fluid or a swab or smear obtained from an outer or inner body surface. Thus, in an embodiment, a sample is a sample of a body fluid, in an embodiment, blood, plasma, serum, saliva or urine, or a sample derived by lavage from tissues or organs, e.g. from the respiratory tract. In a further embodiment, the sample is a blood, plasma, serum or urine sample. In a further embodiment, the sample is a blood or plasma sample or is a serum or plasma sample, in a further embodiment is a blood sample. In an embodiment, in case the sample is a blood sample, the method of the present invention comprises a further step of obtaining a serum or plasma sample from said blood sample, comprises treating said sample with a release agent, or comprises (hemo)lysing said sample. In an embodiment, the sample is a citrate blood sample, a heparin blood sample, or an EDTA blood sample. In a further embodiment, the sample is an EDTA blood sample. Biological samples can be derived from a subject as specified elsewhere herein. Techniques for obtaining the aforementioned different types of biological samples are well known in the art. For example, blood samples may be obtained by blood taking, e.g. by puncturing an arterial and/or a venous blood vessel. In an embodiment, the sample is a sample of cells, tissue, or an organ obtained from a subject. In an embodiment, in case said sample is an organ, said subject is not a human. Solid samples can be obtained by well known techniques including, in an embodiment, scrapes, swabs or biopsies appropriate regions of a body. As is known to the skilled person, such samples can be obtained by use of brushes, (cotton) swabs, spatulae, rinse/wash fluids, punch biopsy devices, puncture of cavities with needles or surgical instrumentation. Moreover, at least one analyte of interest may be enriched, extracted, and/or purified from the sample by methods and means known in the art. Thus, the term sample also may relate to preparations comprising or suspected to comprise at least one analyte of interest which are diluted, enriched, purified and/or extracted from a sample. In an embodiment, the sample is a sample not derived from a subject, e.g. a water sample, a sewage sample, a food sample, or the like. For example, said sample is a biological sample, in an embodiment comprising biological molecules. For example, a sample as described in WO 2021/094409 A1 may be used.

The term "subject", as used herein, relates to an animal, in an embodiment a mammal, in a further embodiment a primate, in a further embodiment a human. In an embodiment, the subject is an experimental animal, in particular a mouse, rat, guinea pig, pig, or dog. In a further embodiment, the subject is a livestock or companion animal, in particular a cat, dog, goat, sheep, cattle, horse, or pig. In an embodiment, the subject is a subject known or suspected to be treated with at least one immunomodulatory compound, in particular at least one immunomodulatory macrolide. Thus, in an embodiment, the subject is a transplant recipient, in particular a human transplant recipient under immunosuppressive treatment, in particular under immunomodulatory macrolide treatment.

The in vitro diagnostic medical device may detect a presence and/or an abundance and/or a concentration of one or more analytes, e.g. a plurality of analytes, in the sample. The analyte may be a sample component as such. Additionally or alternatively, the analyte may be a fragment of a component present in the sample. As an example, one or more of the sample components may be fragmented during the measurement process, e.g. during an ionization procedure, such that a single sample component may yield a plurality of different fragments, e.g. charged fragments, which may at least partially be detected as analytes by the in vitro diagnostic medical device.

The term "dilution factor of a sample", as used herein is a broad term and is to be given its ordinary and customary meaning to a person of ordinary skill in the art and is not to be limited to a special or customized meaning. The term specifically may refer, without limitation, to a measure for an aliquot volume to a final volume. The dilution factor may be measure for how much of the original sample is present in a total solution, after dilution. The dilution factor may be a measure of how much more concentrated the original sample is in comparison to the sample during measurement. The dilution factor may be one or more of a ratio or an exponent. For quantitatively determining an analyte from a sample, a defined volume of calibrator(s) and sample may be used. However, the volume between calibrator and sample can vary. In this case the dilution factor can be used and/or considered in the determination of the analyte concentration. For example, in case the in vitro diagnostic medical device is a mass spectrometry device, for quantitatively determining an analyte from a sample the dilution factor may be multiplied with an area ratio of the analyte and an internal standard.

As outlined above, step a) comprises preparing a mixture by diluting defined volumes of calibrators comprising the analyte of interest with a defined volume of a dilution reagent comprising at least one first internal standard ISTDa.

Defined volumes of calibrators, comprising the analyte of interest may be diluted in step a) with a defined volume of the dilution reagent comprising the ISTDa. The term "diluting", as used herein is a broad term and is to be given its ordinary and customary meaning to a person of ordinary skill in the art and is not to be limited to a special or customized meaning. The term specifically may refer, without limitation, to at least one process of adding at least one solvent to a solute. The adding of the solvent may decreases the concentration of the solute in the solution. The diluting may comprise adding defined volumes of calibrators, comprising the analyte of interest, with a defined volume of the dilution reagent comprising the first internal standard ISTDa.

The term "mixture", as used herein is a broad term and is to be given its ordinary and customary meaning to a person of ordinary skill in the art and is not to be limited to a special or customized meaning. The term specifically may refer, without limitation, to a combination comprising two or more different chemical substances. The two or more substances may not be chemically bonded. The two or more substances may be mixed in the form of solutions, suspensions and colloids. The preparing of the mixture comprises diluting the defined volumes of calibrators comprising the analyte of interest with a defined volume of a dilution reagent. The preparing of the mixture may comprise providing the defined volumes of calibrators and the defined volume of the dilution reagent. The preparing of the mixture may comprise one or more of pipetting, measuring, weighing and the like. The preparing of the mixture may comprise further steps such as mechanical actions e.g. one or more of mixing, blending, shaking, sonicating, stirring, vortexing and the like.

The term "calibrator" is a broad term and is to be given its ordinary and customary meaning to a person of ordinary skill in the art and is not to be limited to a special or customized meaning. The term specifically may refer, without limitation, to material used as measurement standard. The calibrator may be a measurement standard used in calibration of a measuring system according to a specified measurement procedure. The calibrator may be a sample comprising the analyte of interest.

The term "dilution reagent", as used herein is a broad term and is to be given its ordinary and customary meaning to a person of ordinary skill in the art and is not to be limited to a special or customized meaning. The term specifically may refer, without limitation, to any solvent. The dilution reagent comprises at least one first internal standard ISTDa. The dilution reagent may comprise further compounds, such as a buffer, one or more enzymes, in particular a hydrolase such as a DNase, RNase, and/or a protease, at least one salt, and any other compound deemed appropriate by the skilled person.

The dilution reagent may in particular be or comprise a derivatization reagent, for example, a hemolysis and/or derivatization reagent and/or analyte as described in WO 2021/094409 A1 may be used. The term "derivatization reagent", as used herein, relates to any composition comprising at least one reagent causing derivatization of the analyte, in an embodiment by a nucleophilic reagent as specified herein below. In an embodiment, the derivatization reagent is a liquid composition, in an embodiment comprising at least one solvent in addition to the nucleophilic reagent, such as methanol, acetonitrile, and the like. In a further embodiment, the derivatization reagent only comprises the nucleophilic reagent, i.e. consists of or essentially consists of the nucleophilic reagent.

The term "nucleophilic reagent" is understood by the skilled person to relate to a chemical species that donates an electron pair to form a chemical bond. Nucleophiles that exist in a water medium include but are not limited to -NH₂, -NHR, -OH, -SH, -Se⁻, (R',R",R"')P, N₃, RCOOH, F⁻, Cl⁻, Br⁻, and I⁻. A nucleophilic reagent, in an embodiment, comprises a moiety, carrying an orbital that serves as the highest occupied molecular orbital (HOMO) that is able to attack the lowest unoccupied molecular orbital (LUMO) of an electrophile, e.g. a lactone analyte, thereby forming a new molecule comprised of the formerly nucleophilic unit and the analyte moiety. In an embodiment, the term includes amines, alcohols, thiols, and selenols. In an embodiment, the nucleophilic reagent is an amine, in a further embodiment is a primary or secondary amine. In an embodiment, the nucleophilic reagent is a primary or secondary alkyl amine, in a further embodiment a C₁ to C₈ alkyl primary or secondary amine.

In a further embodiment, the nucleophilic reagent is a primary amine, in a further embodiment a primary alkyl amine, in a further embodiment a C₁ to C₈ alkyl primary amine. In a further embodiment, the nucleophilic reagent is butylamine, propylamine, pentylamine, or hexylamine, in an embodiment n-butylamine, n-propylamine, n-pentylamine, or n-hexylamine. In an embodiment, the nucleophilic reagent is an n-alkyl primary amine, in an embodiment a C₁ to C₈ n-alkyl primary amine, in a further embodiment a butylamine, in a further embodiment is n-butylamine (CAS NO: 109-73-9).

In an embodiment, the dilution reagent comprises a lysis reagent. As is understood by the skilled person, in case the sample is a sample comprising erythrocytes, e.g. a blood sample, said lysis may be hemolysis. Means and methods for inducing lysis of cells are known in the art and include in particular freezing and thawing of a preparation comprising cells, addition of ammonium-chloride or of a mixture of ammonium-chloride and potassium ions to a preparation comprising erythrocytes, or diluting a preparation comprising erythrocytes with a hypoosmolar diluent, e.g. with deionized or distilled water. Thus, the lysis reagent may be a solution comprising ammonium-chloride or of a mixture of ammonium-chloride and potassium ions, may be deionized or distilled water or any hypoosmotic solution inducing lysis. Lysis reagent may, however, in principle also be or comprise a chaotropic agent and/or a detergent. In an embodiment, the lysis reagent is a derivatization reagent as specified herein above, in particular is a primary amine, in an embodiment a primary alkyl amine, in a further embodiment a C₁ to C₈ alkyl primary amine, in an embodiment an n-alkyl primary amine, in a further embodiment a C₁ to C₈ n-alkyl primary amine, in a further embodiment is a butylamine, propylamine, pentylamine, or hexylamine, in an embodiment n-butylamine, n-propylamine, n-pentylamine, or n-hexylamine, in a further embodiment is n-butylamine (CAS NO: 109-73-9).

The term "internal standard" (ISTD), as used herein is a broad term and is to be given its ordinary and customary meaning to a person of ordinary skill in the art and is not to be limited to a special or customized meaning. The term specifically may refer, without limitation, to a known amount of a substance. The internal standard may exhibit similar properties as the analyte of interest when subjected to a workflow using the in vitro diagnostic medical device, e.g. a mass spectrometric detection workflow. The workflow may comprise any pretreatment, enrichment and actual detection step.

The term "first internal standard", as used herein is a broad term and is to be given its ordinary and customary meaning to a person of ordinary skill in the art and is not to be limited to a special or customized meaning. The term specifically may refer, without limitation, to an internal standard added in step a) of the method. The term "inert first internal standard", as used herein is a broad term and is to be given its ordinary and customary meaning to a person of ordinary skill in the art and is not to be limited to a special or customized meaning. The term specifically may refer, without limitation, to a substance which is present in the dilution reagent.

The first internal standard ISTDa may be unrelated to the analyte. The ISTDa may exhibit similar properties as the analyte of interest, but may still be clearly distinguishable from the analyte of interest. This behavior of the ISTDa may be referred to as unrelated compound to the analyte. Exemplified, during chromatographic separation, such as gas or liquid chromatography, the ISTDa has about the same retention time as the analyte of interest from the sample. Thus, both the analyte and the ISTDa enter the mass spectrometer at the same time. The ISTDa however, may exhibit a different molecular mass than the analyte of interest from the sample. This may allow a mass spectrometric distinction between ions from the ISTDa and ions from the analyte by means of their different mass/charge (m/z) ratios. Both are subj ect to fragmentation and provide daughter ions. These daughter ions can be distinguished by means of their m/z ratios from each other and from the respective parent ions. Consequently, following calibration, a separate determination and quantification of the signals from the ISTDa and the analyte can be performed. Since the ISTDa has been added in known amounts, the signal intensity of the analyte from the sample can be attributed to a specific quantitative amount of the analyte. Thus, the addition of an ISTDa allows for a relative comparison of the amount of analyte detected, and enables unambiguous identification and quantification of the analyte(s) of interest present in the sample when the analyte(s) reach the mass spectrometer. For example, the first internal standard may comprise an isotope-labeled derivative of the analyte, e.g. in case the analyte is an immunomodulatory macrolide, the first internal standard may be an isotope-labeled butylamide derivative of the immunomodulatory macrolide. Thus, the first internal standard may comprise, in an embodiment may be, an isotope-labeled n-butylamide derivative of Everolimus, Sirolimus and/or Tacrolimus. The first internal standard may comprise, in an embodiment may be, Everolimus-butylamide-²H₉, Sirolimus-butylamide-²H₉, and/or Tacrolimus-butylamide-²H₉. Typically, but not necessarily, the ISTDa is an isotopically labeled variant (comprising e.g. ²H, ¹³C, or ¹⁵N etc. label) of the analyte of interest.

Step b) comprises performing at least one sample preparation workflow on a defined volume of the mixture thereby generating a prepared mixture. A defined volume of the mixture of step a) may be submitted for a sample preparation workflow.

The term "sample preparation workflow", as used herein is a broad term and is to be given its ordinary and customary meaning to a person of ordinary skill in the art and is not to be limited to a special or customized meaning. The term specifically may refer, without limitation, to at least one process of preparing a sample for subsequent measurement. The workflow may comprise a single step or a plurality of subsequently and/or in parallel performed steps. The sample preparation workflow may comprise generating a prepared mixture which can be used for subsequent measurement. The sample preparation workflow may comprise sample purification and/or sample dilution and/or sample concentration. The sample may be subjected to one or more pretreatment and/or a sample preparation step(s). The sample may be pretreated by physical and/or chemical methods, for example by centrifugation, filtration, mixing, homogenization, chromatography, purification precipitation, dilution, concentration, contacting with a binding and/or detection reagent, and/or any other method deemed appropriate by the skilled person.

The sample preparation workflow comprises adding at least one second internal standard ISTDb. The term "second internal standard", as used herein is a broad term and is to be given its ordinary and customary meaning to a person of ordinary skill in the art and is not to be limited to a special or customized meaning. The term specifically may refer, without limitation, to a compound that is suitable for serving as an internal standard for ISTDa. The first internal standard ISTDa and the second internal standard ISTDb may be unrelated compounds to the analyte. The internal standards ISTDa and ISTDb may have similar properties to the analyte depending on the sample preparation, optionally type of purification, and ionization properties. The internal standards ISTDa and ISTDb used in steps a) and b) may be selected depending on the analytes of interest.

For example, the second internal standard may be similar to the first internal standard ISTDa. For example, the second internal standard ISTDb may be an isotope-labelled molecule of the first internal standard ISTDa or a compound with similar chemo physical properties to the first internal standard ISTDa. The internal standards ISTDa and ISTDb may have similar properties in at least one molecular descriptor. The molecular descriptor may one or more of polar surface area, number of hydrogen bond acceptors and donors, ionizable groups, permanent charges, e.g. quaternary amines, sulfates, phosphates, nitro groups, and size. The internal standards ISTDa and ISTDb may have similar properties to the analyte of interest, depending on one or more of i) the sample preparation and the type of purification (if any), e.g. LC, Size exclusion chromatography (SEC), antibody capturing, extraction, and the like, and ii) in case Mass Spectrometry (MS), the ionization properties. Embodiments are possible in which descriptors for i) and ii are similar. The internal standards ISTDa and ISTDb may be measured in one method together with the analyte(s) of interest and may therefore not be lost during sample preparation or have very different retention times or require different ionization modes. The term "similar properties", as used herein is a broad term and is to be given its ordinary and customary meaning to a person of ordinary skill in the art and is not to be limited to a special or customized meaning. The term specifically may refer, without limitation, to embodiments with identical properties and embodiments in which deviation in at least one property occur. The internal standards ISTDa and ISTDb may have one or more similar properties but may differ to some extend in one or more of these descriptors. The term "similar" further may refer to the fact that deviations are possible as long as behavior during measurement allow conclusion on the other ISTD. For example, the polar surface area of ISTDa and ISTDb may vary by ≤ ± 20% from the analyte of interest. For example, the number of hydrogen bond acceptors and donors of ISTDa and ISTDb may vary by ≤ ± 5 for analyte of interest with a MW < 2000 and may be ≤ ±10 for analytes of interest with a MW < 5000. For example, the number of ionizable groups of ISTDa and ISTDb may be ≤ ± 5 from the analyte of interest. For example, the netto charge of the ISTDa and ISTDb may be equal to the netto charge of the analyte of interest. For example, the sizes of ISTDa and ISTDb may vary by ≤ ± 30% from the analyte of interest. However, other embodiments are feasible. For example, the internal standards ISTDa and ISTDb may have different properties. The prerequisite may be that for both internal standards ISTDa and ISTDb an antibody is available. For example, in cases like immunodiagnostics, the compounds that are used as ISTDa and ISTDb may be chosen differently. These compounds used for immunodiagnostics may not even be need to be remotely similar. For example, antibodies may be used that can be conjugated to magnetic beads that can capture the ISTDa and ISTDb. Because of using antibodies, and no chromatography and ionization (like in LC-MS), the ISTDa and ISTDb can be very different compounds. This may allow preventing cross-contamination.

The second internal standard ISTDb may be selected in view of the first internal standard ISTDa, so that ISTDa and ISTDb form a pair. The method may comprise using a plurality of pairs of first internal standards ISTDa and second internal standards ISTDb.

For example a first step in the sample preparation workflow, may comprise adding an isotopically labeled ISTD for ISTDa or another compound that may serve as an internal standard for ISTDa, e.g. a compound with similar chemo physical properties to ISTDa. For example, in case of performing the method by using a mass spectrometry device, an isotopically labeled compound that is similar to the analyte of interest may be used.

For example, the analyte is a β-lactam antibiotic, wherein as pairs of first and second internal standards carbamazepine and its isotopically labeled counterpart carbamazepine are used, in an embodiment carbamazepine ¹³C₆.

For example, the analyte is a lactone analyte, wherein the first internal standard comprises an isotope-labeled derivative of the lactone analyte and/or of a nucleophilic reagent-derivative of said lactone analyte, as described herein above.

In step b), in addition to the second internal standard ISTDb, at least one third internal standard ISTDanalyte that accounts for the analyte of interest for which quantitation is sought may be added to the mixture.

Step c) comprises performing at least one sample measurement on the prepared mixture comprising determining a peak area for each of the first internal standard ISTDa and the second internal standard ISTDb using an in vitro diagnostic medical device and determining an area ratio ARₛₐₘₚₗₑ of ISTDa and ISTDb by using at least one processing device.

The term "sample measurement" as used herein is a broad term and is to be given its ordinary and customary meaning to a person of ordinary skill in the art and is not to be limited to a special or customized meaning. The term specifically may refer, without limitation, to at least one process of determining a quantifiable result on the prepared mixture using the in vitro diagnostic medical device, e.g. the mass spectrometry device. The sample measurement may comprise measuring different compounds. The sample measurement may comprise measuring ISTDa and ISTDb. The sample measurement may further comprise measuring the analyte of interest and the third internal standard ISTDanalyte. The quantifiable result may be, e.g. in case of measurement via LC-MS, a peak area. Thus, in step c) a peak area for each of the first internal standard ISTDa and the second internal standard ISTDb is determined.

The term "processing device" as used herein is a broad term and is to be given its ordinary and customary meaning to a person of ordinary skill in the art and is not to be limited to a special or customized meaning. The term specifically may refer, without limitation, to a device or a combination of devices configured for controlling at least one function of at least one other device, such as of at least one other component of the in vitro diagnostics medical device, e.g. the mass spectrometry device. The processing device may e.g. comprise at least one processor and/or at least one data storage device. Thus, as an example, the at least one processing device control unit may comprise at least one data processing device having a software code stored thereon comprising a number of computer commands. The processing device may be an element of an in vitro diagnostics medical device or a further device, e.g. a remote device. The processing device is configured for determining an area ratio ARₛₐₘₚₗₑ of ISTDa and ISTDb.

Step d) comprises performing at least one calibration measurement on a plurality of calibration samples. The term "calibration samples" as used herein is a broad term and is to be given its ordinary and customary meaning to a person of ordinary skill in the art and is not to be limited to a special or customized meaning. The term specifically may refer, without limitation, to a sample having a predefined concentration of ISTDa and ISTDb. For each measured calibration sample an area ratio of ISTDa and ISTDb ${Area}_{ISTDa} / {Area}_{ISTDb}$ may be calculated. The processing device is configured for determining an averaged (mean) area ratio AR_{calibration,av} of ISTDa and ISTDb of the calibration samples. The area ratios of all calibration samples may be averaged. The averaged area ratio AR_{calibration,av} may be determined by ${AR}_{calibration , av} = \frac{1}{n ⋅ z} {\sum }_{i = 1}^{z} {\sum }_{j = 1}^{n} \frac{{ISTDa}_{ij}}{{ISTDb}_{ij}} ,$ with z being the number of calibration samples and n being the number of pairs of first internal standard and second internal standard.

Samples where the sample volume may significantly vary will show an area ratio ARₛₐₘₚₗₑ = Area_{ISTDa}/Area_{ISTDb} that is different from the averaged area ratio AR_{calibration,av}. The deviation Δ of the area ratio ARₛₐₘₚₗₑ and the averaged area ratio AR_{calibration,av} may be determined by $Δ = \frac{\frac{1}{z} {\sum }_{i = 1}^{z} {\sum }_{j = 1}^{n} \frac{{ISTDa}_{ij}}{{ISTDb}_{ij}}}{{\sum }_{j = 1}^{n} \frac{{ISTDa}_{j}}{{ISTDb}_{j}}} .$

Using the deviation of both area ratios, i.e. ARₛₐₘₚₗₑ vs AR_{calibration,av}, the dilution factor may be calculated in step e). The dilution factor is determined by determining a deviation of the area ratio ARₛₐₘₚₗₑ and the averaged area ratio AR_{calibration,av} by using the processing device. By using a solution comprising a first internal standard ISTDa that is added to the sample of interest, which comprises an analyte of interest, in the first instance and addition of a second internal standard ISTDb that is added to a known volume of the sample-ISTDa mixture, the dilution factor can be calculated. In the next step, therefore, the analyte concentration can be calculated.

The method for determining a dilution factor according to the present invention may be used especially for the internal standards, as these need to be quantified from whole blood. The method may be especially suitable for internal standards that allow for dilution factor calculation, these are independent of the analytes for which the quantitation is performed. However, the method for determining a dilution factor according to the present invention may be used for any type of quantitation of molecules (both small and large) from unknown volumes.

In a further aspect of the present invention, a method for determining a concentration of an analyte of interest in a sample is disclosed.

The method comprises the following steps:
i) determining a dilution factor using a method for determining a dilution factor according to the present invention, wherein the sample preparation workflow comprises adding a third internal standard ISTDanalyte which accounts for the analyte, wherein the sample measurement further comprises determining a peak area for the analyte of interest and the third internal standard ISTDanalyte by using the processing device,
ii) determining an area ratio of the analyte and the third internal standard ISTDanalyte by using the processing device;
iii) correcting, by using the processing device, the area ratio of the analyte and the third internal standard ISTDanalyte by using the dilution factor;
iv) determining the analyte concentration from the corrected area ratio by using the processing device.

The correcting may comprises multiplying the area ratio with the dilution factor.

The method may comprise at least one calibration step. The calibration step may comprise determining a relationship between an area ratio and the analyte concentration.

The method steps and/or substeps of the method steps may, for example, be performed in the given order. However, a different order may also be possible. The method may further comprise additional method steps, which are not listed. Further, one or more or even all of the method steps and/or the substeps, may be performed only once or repeatedly.

With respect to definitions and embodiments of the method described in a further aspect, reference is made to definitions and embodiments of the method described in a first aspect of the present invention.

The methods may be computer-implemented.

Further disclosed and proposed herein is a computer program including computer-executable instructions for performing one or more of the methods according to the present invention in one or more of the embodiments enclosed herein when the instructions are executed on a computer or computer network. Specifically, the computer program may be stored on a computer-readable data carrier and/or on a computer-readable storage medium.

As used herein, the terms "computer-readable data carrier" and "computer-readable storage medium" specifically may refer to non-transitory data storage means, such as a hardware storage medium having stored thereon computer-executable instructions. The computer-readable data carrier or storage medium specifically may be or may comprise a storage medium such as a random-access memory (RAM) and/or a read-only memory (ROM).

Thus, specifically, one, more than one or even all of method steps as indicated above may be performed by using a computer or a computer network, preferably by using a computer program.

Further disclosed and proposed herein is a computer program product having program code means, in order to perform one or more of the methods according to the present invention in one or more of the embodiments enclosed herein when the program is executed on a computer or computer network. Specifically, the program code means may be stored on a computer-readable data carrier and/or on a computer-readable storage medium.

Further disclosed and proposed herein is a data carrier having a data structure stored thereon, which, after loading into a computer or computer network, such as into a working memory or main memory of the computer or computer network, may execute one or more of the methods according to one or more of the embodiments disclosed herein.

Further disclosed and proposed herein is a non-transient computer-readable medium including instructions that, when executed by one or more processors, cause the one or more processors to perform one or more of the methods according to one or more of the embodiments disclosed herein.

Further disclosed and proposed herein is a computer program product with program code means stored on a machine-readable carrier, in order to perform one or more of the methods according to one or more of the embodiments disclosed herein, when the program is executed on a computer or computer network. As used herein, a computer program product refers to the program as a tradable product. The product may generally exist in an arbitrary format, such as in a paper format, or on a computer-readable data carrier and/or on a computer-readable storage medium. Specifically, the computer program product may be distributed over a data network.

Finally, disclosed and proposed herein is a modulated data signal which contains instructions readable by a computer system or computer network, for performing one or more of the methods according to one or more of the embodiments disclosed herein.

Referring to the computer-implemented aspects of the invention, one or more of the method steps or even all of the method steps of the methods according to one or more of the embodiments disclosed herein may be performed by using a computer or computer network. Thus, generally, any of the method steps including provision and/or manipulation of data may be performed by using a computer or computer network. Generally, these method steps may include any of the method steps, typically except for method steps requiring manual work, such as providing the samples and/or certain aspects of performing the actual measurements.

Specifically, further disclosed herein are:
- a computer or computer network comprising at least one processor, wherein the processor is adapted to perform one or more of the methods according to one of the embodiments described in this description,
- a computer loadable data structure that is adapted to perform one or more of the methods according to one of the embodiments described in this description while the data structure is being executed on a computer,
- a computer program, wherein the computer program is adapted to perform one or more of the methods according to one of the embodiments described in this description while the program is being executed on a computer,
- a computer program comprising program means for performing one or more of the methods according to one of the embodiments described in this description while the computer program is being executed on a computer or on a computer network,
- a computer program comprising program means according to the preceding embodiment, wherein the program means are stored on a storage medium readable to a computer,
- a storage medium, wherein a data structure is stored on the storage medium and wherein the data structure is adapted to perform one or more of the methods according to one of the embodiments described in this description after having been loaded into a main and/or working storage of a computer or of a computer network, and
- a computer program product having program code means, wherein the program code means can be stored or are stored on a storage medium, for performing one or more of the methods according to one of the embodiments described in this description, if the program code means are executed on a computer or on a computer network.

In a further aspect of the present invention an in vitro diagnostic medical device is disclosed. The in vitro diagnostic medical device comprising
- at least one sample preparation unit configured for preparing a mixture by diluting defined volumes of calibrators comprising the analyte of interest with a defined volume of a dilution reagent comprising at least one first internal standard ISTDa, wherein the sample preparation unit is configured for performing at least one sample preparation workflow on a defined volume of the mixture thereby generating a prepared mixture, wherein the sample preparation workflow comprises adding at least one second internal standard ISTDb;
- at least one measurement unit configured for performing at least one in vitro diagnostic measurement, such as mass spectrometry, wherein the measurement unit is configured for performing at least one sample measurement on the prepared mixture, wherein the measurement unit is further configured for performing at least one calibration measurement on a plurality of calibration samples, wherein the calibration samples have a predefined concentration of ISTDa and ISTDb;
- at least one processing device configured for determining a peak area for each of the first internal standard ISTDa and the second internal standard ISTDb, determining an area ratio ARₛₐₘₚₗₑ of ISTDa and ISTDb and for determining an averaged area ratio AR_{calibration,av} of ISTDa and ISTDb of the calibration samples, wherein the processing device is configured for determining a dilution factor by determining a deviation of the area ratio ARₛₐₘₚₗₑ and the averaged area ratio AR_{calibration,av}.

The in vitro diagnostic medical device may be configured for performing the one or more of methods according to the present invention. With respect to definitions and embodiments of the in vitro diagnostic medical device described in a further aspect, reference is made to definitions and embodiments of the methods described above.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows an in vitro diagnostic medical device;
- Figure 2: shows a flowchart schematically depicting a method for determining a dilution factor of a sample;
- Figures 3A to 3D: show experimental data illustrating different steps of the method for determining a dilution factor of a sample;
- Figure 4A and B: illustrate a method for determining a concentration of an analyte of interest in a sample in a flowchart (Figure 4A) and in a schematic illustration of workflow steps (Figure 4B); and
- Figures 5 to 7: show experimental data illustrating an embodiment of the method for determining a concentration of an analyte of interest in a sample.

### Detailed description of the embodiments

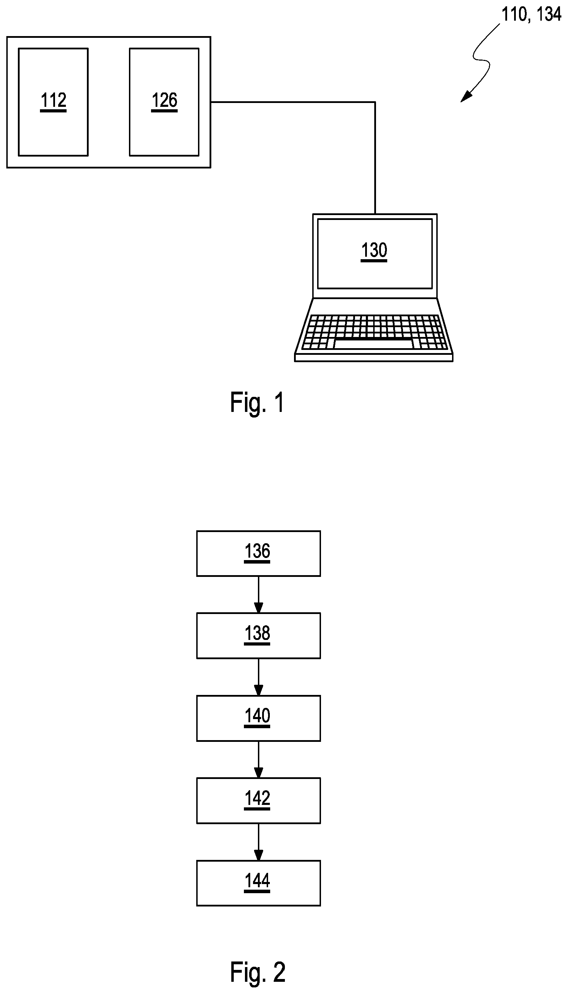

Figure 1 shows an in vitro diagnostic medical device 110. The in vitro diagnostic medical device 110 comprises at least one sample preparation unit 112 configured for preparing a mixture by diluting defined volumes of calibrators comprising an analyte 115 of interest with a defined volume of a dilution reagent comprising at least one first internal standard ISTDa 118. The sample preparation unit 112 is configured for performing at least one sample preparation workflow 120 on a defined volume of the mixture thereby generating a prepared mixture. The sample preparation workflow 120 comprises adding at least one second internal standard ISTDb 124 .

As illustrated in Figure 1, the in vitro diagnostic medical device 110 further comprises at least one measurement unit 126 configured for performing at least one in vitro diagnostic measurement. The measurement unit 126 is configured for performing at least one sample measurement on the prepared mixture. The measurement unit 126 is further configured for performing at least one calibration measurement on a plurality of calibration samples 128, wherein the calibration samples 128 have a predefined concentration of ISTDa 118 and ISTDb 124.

As shown in Figure 1, the in vitro diagnostic medical device 110 further comprises at least one processing device 130. The processing device 130 is configured for determining a peak area for each of the first internal standard ISTDa 118 and the second internal standard ISTDb 124. The processing device 130 is further configured for determining an area ratio ARₛₐₘₚₗₑ 131 of ISTDa 118 and ISTDb 124 and for determining an averaged area ratio AR_{calibration,av} 133 of ISTDa 118 and ISTDb 124 of the calibration samples 128. The processing device 130 is further configured for determining a dilution factor by determining a deviation 132 of the area ratio ARₛₐₘₚₗₑ 131 and the averaged area ratio AR_{calibration,av} 133.

The in vitro diagnostic medical device 110 may be a medical device, whether used alone or in combination, which is configured for in vitro examination of at least one sample 135 derived from the human body and/or configured for providing information for diagnostic, monitoring or compatibility purposes. The in vitro diagnostic medical device 110 may comprise one or more of at least one reagent, at least one calibrator, at least one control material, at least one specimen receptacle, software, related instruments or apparatus or other articles. The in vitro diagnostic medical device 110 may e.g. be a mass spectrometry device 134, as shown in Figure 1. Additionally or alternatively, the in vitro diagnostic medical device may e.g. be a device for immunodiagnostics, a device configured for performing a measurement technique using one or more of quantitative nuclear magnetic resonance (qNMR), liquid chromatography-ultraviolet (LC-UV), luminescence, bioluminescence, electrochemiluminescence, colorimetry, turbidity, absorption, calorimetric, fluorescence, phosphorescence, and the like.

The in vitro diagnostic medical device 110 may be configured for performing the one or more of methods according to the present invention. The in vitro diagnostic medical device 110 may, e.g., be configured for performing a method for determining a dilution factor of a sample 135 comprising an analyte 115 of interest. The method steps and/or substeps of the method steps may, for example, be performed in the given order. However, a different order may also be possible. The method may further comprise additional method steps, which are not listed. Further, one or more or even all of the method steps and/or the substeps, may be performed only once or repeatedly. The method for determining a dilution factor of a sample is schematically depicted in the flowchart of Figure 2. The method comprises the following steps:
a) (136) preparing a mixture by diluting defined volumes of calibrators comprising the analyte 115 of interest with a defined volume of a dilution reagent comprising at least one first internal standard ISTDa 118;
b) (138) performing at least one sample preparation workflow 120 on a defined volume of the mixture thereby generating a prepared mixture, wherein the sample preparation workflow 120 comprises adding at least one second internal standard ISTDb 124;
c) (140) performing at least one sample measurement on the prepared mixture comprising determining a peak area for each of the first internal standard ISTDa 118 and the second internal standard ISTDb 124 using an in vitro diagnostic medical device 110 and determining an area ratio ARₛₐₘₚₗₑ of ISTDa 118 and ISTDb 124 by using at least one processing device 130;
d) (142) performing at least one calibration measurement on a plurality of calibration samples 128, wherein the calibration samples 128 have a predefined concentration of ISTDa 118 and ISTDb 124, and determining an averaged area ratio AR_{calibration,av} of ISTDa 118 and ISTDb 124 of the calibration samples 128 by using the processing device 130;
e) (144) determining the dilution factor by determining a deviation 132 of the area ratio ARₛₐₘₚₗₑ 131 and the averaged area ratio AR_{calibration,av} 133 by using the processing device 130.

In step a) defined volumes of calibrators, comprising the analyte of interest may be diluted with a defined volume of the dilution reagent comprising the ISTDa 118. For example, the dilution reagent may comprise at least one hemolysis and/or derivatization reagent 145, comprising one or more inert first internal standard ISTDa 118 that are unrelated to the analyte 115. For example, the analyte 115 may be a lactone analyte. The hemolysis and/or derivatization reagent may comprise a nucleophilic reagent. Said lactone analyte may be a macrocyclic lactone comprising an at least twelve-membered lactone ring, in an embodiment is a macrolide. Said lactone analyte may be an immune-modulatory macrolide. Said lactone analyte may be Everolimus, Sirolimus or Tacrolimus. Said nucleophilic reagent may be butylamine, propyl-amine, pentylamine, or hexylamine, in an embodiment n-butylamine, n-propylamine, n-pentylamine, or n-hexylamine. Said nucleophilic reagent may be an amine, an alcohol, a thiol, or a selenol. Said nucleophilic reagent may be a primary amine, in an embodiment a primary alkyl amine, in a further embodiment a C1 to C8 alkyl primary amine. Said nucleophilic reagent may be an n-alkyl primary amine, in an embodiment a C1 to C8 n-alkyl primary amine. Said nucleophilic reagent may be a butylamine. Said nucleophilic reagent may be n-butylamine (CAS NO: 109-73-9).

The first internal standard ISTDa 118 may be unrelated to the analyte 115. The ISTDa 118 may exhibit similar properties as the analyte 115 of interest, but may still be clearly distinguishable from the analyte 115 of interest. For example, the first internal standard 118 comprises an isotope-labeled butylamide derivative of the lactone analyte. The first internal standard 118 may comprise, in an embodiment may be, an isotope-labeled n-butylamide derivative of Everolimus, Sirolimus and/or Tacrolimus. The first internal standard 118 may comprise, in an embodiment may be, Everolimus-butylamide-²H₉, Sirolimus-butylamide-²H₉, and/or Tacrolimus-butylamide-²H₉. In an embodiment, the first internal standard is a d9-butylamine derivative of one of the aforesaid immunomodulatory macrolides. Typically, but not necessarily, the ISTDa 118 is an isotopically labeled variant (comprising e.g. ²H, ¹³C, or ¹⁵N etc. label) of the analyte 115 of interest.

Step b) comprises performing at least one sample preparation workflow 120 on a defined volume of the mixture thereby generating a prepared mixture. A defined volume of the mixture of step a) may be submitted for a sample preparation workflow 120. The sample preparation workflow 120 may comprise a single step or a plurality of subsequently and/or in parallel performed steps. The sample preparation workflow 120 may comprise generating a prepared mixture which can be used for subsequent measurement. The sample preparation workflow 120 may comprise sample purification and/or sample dilution and/or sample concentration. The sample may be subjected to one or more pretreatment and/or a sample preparation step(s). The sample may be pretreated by physical and/or chemical methods, for example by centrifugation, filtration, mixing, homogenization, chromatography, purification precipitation, dilution, concentration, contacting with a binding and/or detection reagent, and/or any other method deemed appropriate by the skilled person.

The sample preparation workflow 120 comprises adding at least one second internal standard ISTDb 124. The second internal standard ISTDb 124 may be a compound that is suitable for serving as an internal standard for ISTDa 118. The first internal standard ISTDa 118 and the second internal standard ISTDb 124 may be unrelated compounds to the analyte 115. The internal standards ISTDa 118 and ISTDb 124 may have similar properties to the analyte 115 depending on the sample preparation, optionally type of purification, and ionization properties. The internal standards ISTDa 118 and ISTDb 124 used in steps a) and b) may be selected depending on the analytes 115 of interest.

For example, the second internal standard ISTDb 124 may be similar to the first internal standard ISTDa 118. For example, the second internal standard ISTDb 124 may be an isotope-labelled molecule of the first internal standard ISTDa 118 or a compound with similar chemo physical properties to the first internal standard ISTDa 118. The internal standards ISTDa 118 and ISTDb 124 may have similar properties in at least one molecular descriptor. The molecular descriptor may one or more of polar surface area, number of hydrogen bond acceptors and donors, ionizable groups, permanent charges, e.g. quaternary amines, sulfates, phosphates, nitro groups, and size. The second internal standard ISTDb 124 may be selected in view of the first internal standard ISTDa 118, so that ISTDa 118 and ISTDb 124 form a pair. The method may comprise using a plurality of pairs of first internal standards ISTDa 118 and second internal standards ISTDb 124. Different embodiments are feasible. For example, the internal standards ISTDa 118 and ISTDb 124 may have different properties. The prerequisite may be that for both internal standards ISTDa 118 and ISTDb 124 an antibody is available. For example, in cases like immunodiagnostics, the compounds that are used as ISTDa 118 and ISTDb 124 may be chosen differently. These compounds used for immunodiagnostics may not even be need to be remotely similar. For example, antibodies may be used that can be conjugated to magnetic beads that can capture the ISTDa 118 and ISTDb 124. Because of using antibodies, and no chromatography and ionization (like in LC-MS), the ISTDa 118 and ISTDb 124 can be very different compounds. This may allow preventing cross-contamination.

For example, the analyte 115 is a β-lactam antibiotic, wherein as pairs of first 118 and second internal standards 124 carbamazepine and its isotopically labeled counterpart carbamazepine are used, in an embodiment carbamazepine 13C6, as described herein above.

For example, the analyte 115 is a lactone analyte, wherein the first internal standard 118 comprises an isotope-labeled derivative of the lactone analyte and/or of a nucleophilic reagent-derivative of said lactone analyte, as described herein above.

In step b), in addition to the second internal standard ISTDb 124, at least one third internal standard ISTDanalyte 146 that accounts for the analyte 115 of interest for which quantitation is sought may be added to the mixture.

Step c) comprises performing at least one sample measurement on the prepared mixture comprising determining a peak area for each of the first internal standard ISTDa 118 and the second internal standard ISTDb 124 using the in vitro diagnostic medical device 110, e.g. the mass spectrometry device 134, and determining an area ratio ARₛₐₘₚₗₑ 131 of ISTDa 118 and ISTDb 124 by using at least one processing device 130. The processing device 130 may be an element of the in vitro diagnostics medical device 110, e.g. the mass spectrometry device 134, or a further device, e.g. a remote device. The processing device 130 is configured for determining an area ratio ARₛₐₘₚₗₑ 131 of ISTDa 118 and ISTDb 124.

Step d) comprises performing at least one calibration measurement on a plurality of calibration samples 128. For each measured calibration sample 128 an area ratio 148 of ISTDa 118 and ISTDb 124 ${Area}_{ISTDa} / {Area}_{ISTDb}$ may be calculated. The processing device 130 is configured for determining an averaged (mean) area ratio AR_{calibration,av} 133 of ISTDa 118 and ISTDb 124 of the calibration samples 128. The area ratios 148 of all calibration samples 128 may be averaged. The averaged area ratio AR_{calibration,av} 133 may be determined by ${AR}_{calibration , av} = \frac{1}{n ⋅ z} {\sum }_{i = 1}^{z} {\sum }_{j = 1}^{n} \frac{{ISTDa}_{ij}}{{ISTDb}_{ij}} ,$ with z being the number of calibration samples 128 and n being the number of pairs of first internal standard 118 and second internal standard 124.

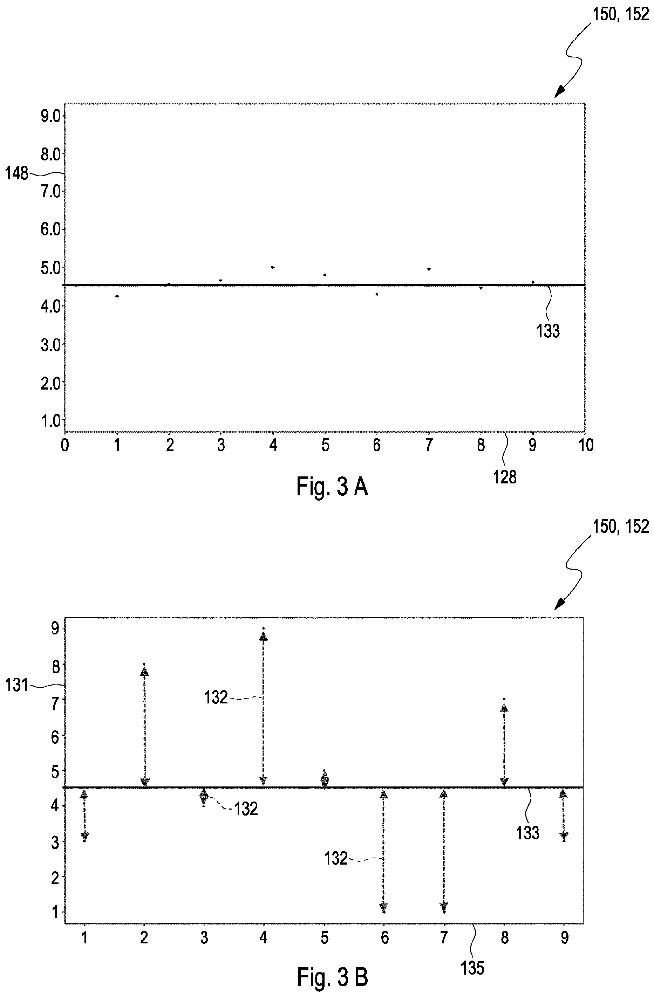

Figures 3A to 3D show experimental data 150 illustrating different steps of the method for determining a dilution factor of a sample 135. Figure 3A shows a diagram 152 with the area ratio 148 of ISTDa 118 and ISTDb 124, which may be written as Area_{ISTDa}/Area_{ISTDb}, shown on the y-axis for each of 9 calibration samples 128, numbered 1 to 9, which are indicated on the x-axis. Further shown in the diagram 152 is the averaged ratio AR_{calibration,av} 133 as a continuous line, which may be calculated by the processing device 130, e.g. according to the above-described manner. Thus, in the example illustrated in Figure 3A, z = 9 since 9 calibration samples 128 are used, and n = 1, since one pair of first internal standard 118 and second internal standard 124 is used.

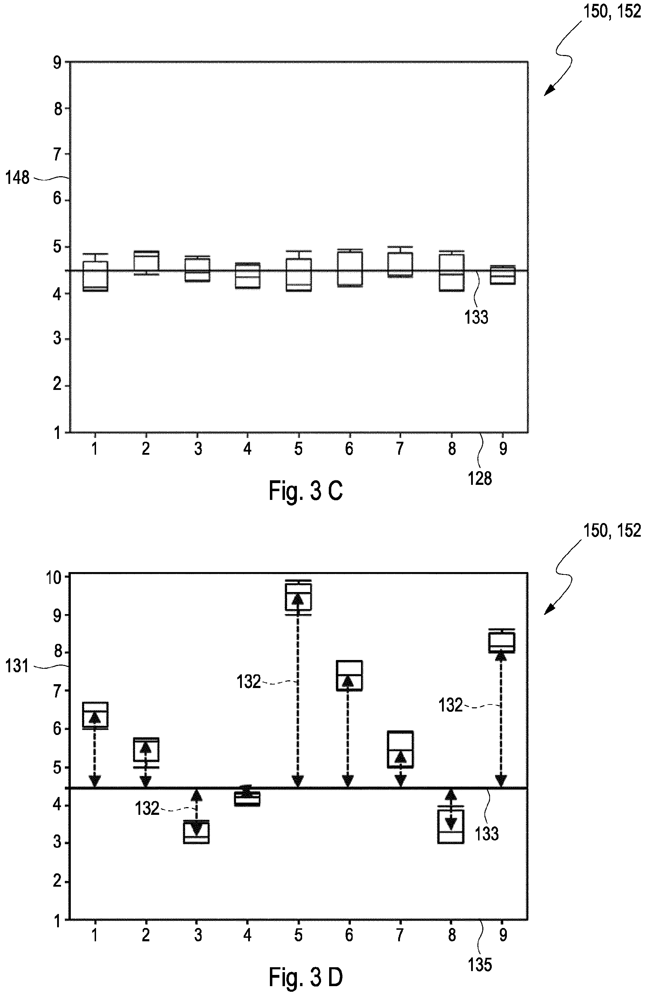

Samples 135 where the sample volume may significantly vary will show an area ratio AR-ₛₐₘₚₗₑ = Area_{ISTDa}/Area_{ISTDb} 131 that is different from the averaged area ratio AR_{calibration,av} 133. The deviation Δ, which is marked by reference sign 132 in the Figures 3B and 3D, of the area ratio ARₛₐₘₚₗₑ 131 and the averaged area ratio AR_{calibration,av} 133 may be determined by $Δ = \frac{\frac{1}{z} {\sum }_{i = 1}^{z} {\sum }_{j = 1}^{n} \frac{{ISTDa}_{ij}}{{ISTDb}_{ij}}}{{\sum }_{j = 1}^{n} \frac{{ISTDa}_{j}}{{ISTDb}_{j}}} .$

Using the deviation 132 of both area ratios, i.e. ARₛₐₘₚₗₑ 131 vs AR_{calibration,av} 133, the dilution factor may be calculated in step e). The dilution factor is determined by determining a deviation 132 of the area ratio ARₛₐₘₚₗₑ 131 and the averaged area ratio AR_{calibration,av} 133 by using the processing device 130. By using a solution comprising a first internal standard ISTDa 118 that is added to the sample 135 of interest, which comprises an analyte 115 of interest, in the first instance and addition of a second internal standard ISTDb 124 that is added to a known volume of the sample-ISTDa mixture, the dilution factor can be calculated. In the next step, therefore, the analyte concentration can be calculated.

Figure 3B illustrates the determination of the dilution factor. Figure 3B shows a diagram 152 with the area ratio ARₛₐₘₚₗₑ 131, which may be written as Area_{ISTDa}/Area_{ISTDb} for each sample 135, shown on the y-axis for each of the 9 samples, numbered 1 to 9, which are indicated on the x-axis. Further indicated in Figure 3B is the continuous line representing the averaged ratio AR_{calibration,av} 133 as determined using the calibraton samples 128. The dilution factor is indicated for each sample 135 by a dotted arrow indicating the deviation Δ 132 of the area ratio ARₛₐₘₚₗₑ 131 and the averaged area ratio AR_{calibration,av} 133 for each sample 135.

As already outlined above, the method may comprise using a plurality of pairs of first internal standards ISTDa 118 and second internal standards ISTDb 124. This situation is illustrated in Figures 3C and 3D. In the situation reflected in Figures 3C and 3D, n = 4 pairs of first internal standards ISTDa 118 and second internal standards ISTDb 124 are used for each of the z = 9 calibration samples 128. Figure 3C shows a diagram 152 with the area ratio 148 of ISTDa 118 and ISTDb 124 shown on the y-axis and the calibration samples 128 in the form of the sample number indicated on the x-axis. Further shown in the diagram 152 is the averaged ratio AR_{calibration,av} 133 as a continuous line, which may be calculated by the processing device 130, e.g. in the above-described manner.

As described above, e.g. in relation to Figure 3B, the dilution factor may be calculated. Figure 3D illustrates the determination of the dilution factor for the situation, where the number n of pairs of ISTDa 118 and ISTDb 124 n = 4 and the number z of calibration samples 128 z = 9. Figure 3D shows a diagram 152 with the area ratio ARₛₐₘₚₗₑ 131, which may be written as Area_{ISTDa}/Area_{ISTDb} for each sample 135, shown on the y-axis for each of the 9 samples 135, numbered 1 to 9, which are indicated on the x-axis. Further indicated in Figure 3D is the continuous line representing the averaged ratio AR_{calibration,av} 133 as determined using the calibraton samples 128. The dilution factor is indicated for each sample 135 by a dotted arrow indicating the deviation Δ 132 of the area ratio ARₛₐₘₚₗₑ 131 and the averaged area ratio AR_{calibration,av} 133 for each sample 135.

The method for determining a dilution factor according to the present invention may be used especially for the internal standards, as these need to be quantified from whole blood 154. The method may be especially suitable for internal standards that allow for dilution factor calculation, these are independent of the analytes 115 for which the quantitation is performed. However, the method for determining a dilution factor according to the present invention may be used for any type of quantitation of molecules (both small and large) from unknown volumes.

As outlined above, in the next step, therefore, the analyte concentration can be calculated using the dilution factor. As an example, the in vitro diagnostic medical device 110, e.g. the mass spectrometry device 134, may be configured for performing a method for determining a concentration of an analyte of interest in a sample.

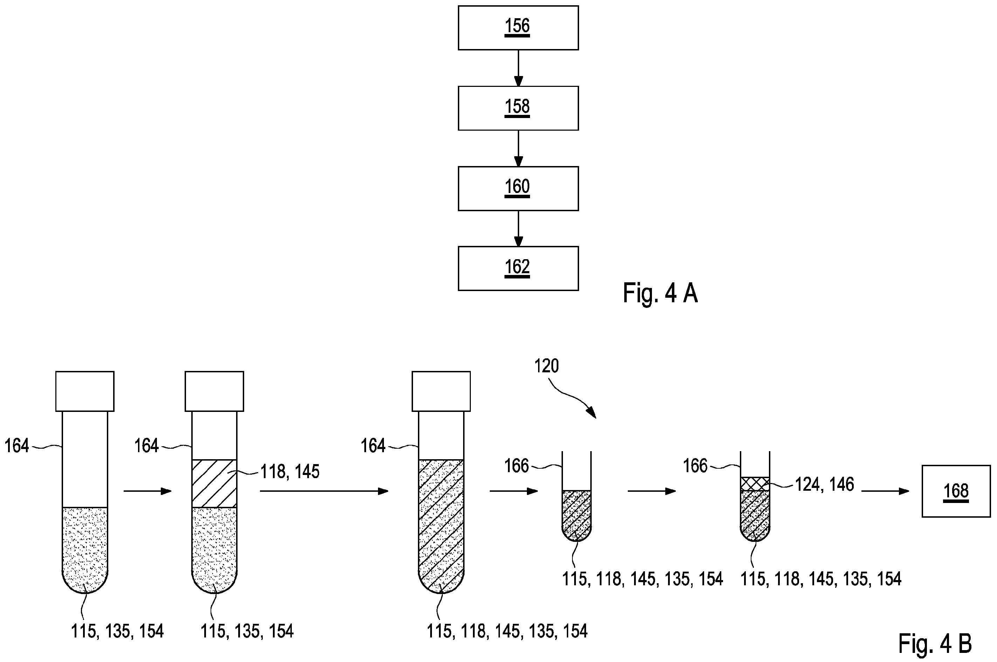

The method for determining a concentration of an analyte of interest in a sample is schematically depicted in the flowchart of Figure 4A. The method steps and/or substeps of the method steps may, for example, be performed in the given order. However, a different order may also be possible. The method for determining a concentration of an analyte of interest in a sample may further comprise additional method steps, which are not listed. Further, one or more or even all of the method steps and/or the substeps, may be performed only once or repeatedly. The method for determining a concentration of an analyte of interest in a sample comprises the following steps:
i) (156) determining a dilution factor using a method for determining a dilution factor according to the present invention, wherein the sample preparation workflow 120 comprises adding a third internal standard ISTDanalyte 146 which accounts for the analyte 115, wherein the sample measurement further comprises determining a peak area for the analyte 115 of interest and the third internal standard ISTDanalyte 146 by using the processing device 130,
ii) (158) determining an area ratio of the analyte and the third internal standard ISTDanalyte 146 by using the processing device 130;
iii) (160) correcting, by using the processing device 130, the area ratio of the analyte 115 and the third internal standard ISTDanalyte 146 by using the dilution factor;
iv) (162) determining the analyte concentration from the corrected area ratio by using the processing device 130.

Figure 4B schematically illustrates in an exemplary fashion a selected number of steps of the method for determining a concentration of an analyte of interest in a sample. Figure 4B shows a vial 164 with a sample 135 comprising whole blood 154. A hemolysis and/or derivatization reagent 145 comprising one or more inert first internal standard ISTDa 118 that are unrelated to the analyte 115 is added to the whole blood 154. The vial 164 may be briefly shaken to blend the hemolysis and/or derivatization reagent 145 with the sample 135 of whole blood 154. A small volume of e.g. 200 µL of the blend is then transferred to an assay cup 166. Subsequently, isotopically labeled ISTDb 124 forming a pair with the previously added ISTDa 118 is added together with ISTDanalyte 146. This is followed by a sample work-up, which may e.g. comprise bead purification, and a sample measurement, e.g. using the mass spectrometry device 134. An area ratio of the analyte 115 and the third internal standard ISTDanalyte 146 is determined on the basis of the measurement by using the processing device 130 (not shown). The area ratio of the analyte and the third internal standard ISTDanalyte 146 is corrected by using the dilution factor determined using the method for determining a dilution factor according to any one of the embodiments described above or as further described below. The analyte concentration is determined from the corrected area ratio by using the processing device 130.

The validity of the proposed method was assessed by the following experiment. To piperacillin spiked serum, water with 2-(4-methoxyphenoxy)ethanol (1 mg/mL) was added in different volumes. Next, the samples were measured by a fully automized analyzer, capable of purifying the compounds of interest prior to measurement by LC-MS.

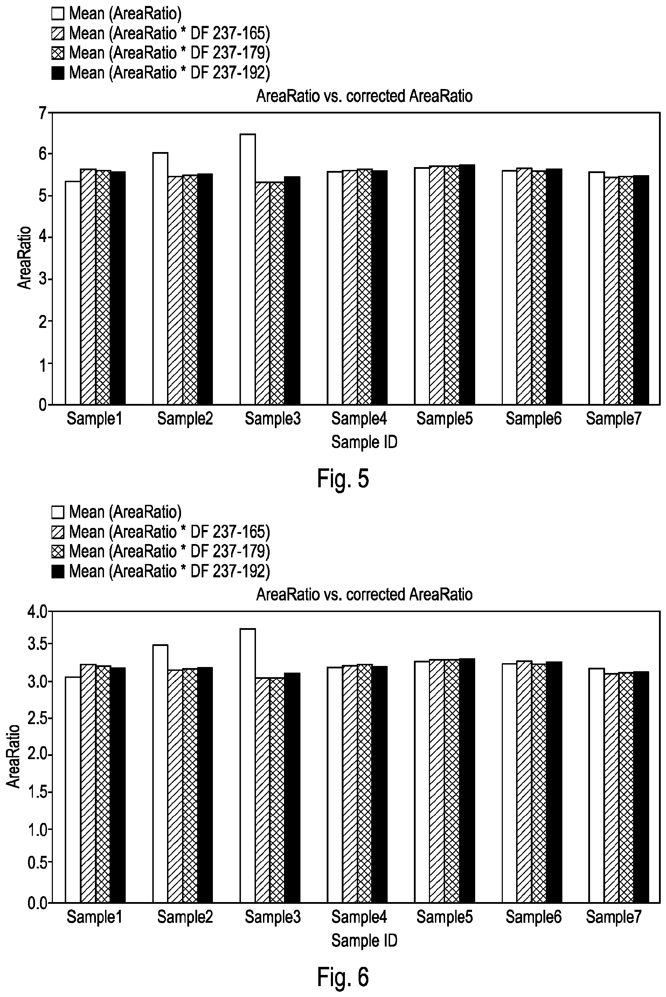

Figures 5 to 7 show further experimental results. Figures 5 and 6 show a graphic overview of AreaRatio vs. corrected AreaRatio from Piperacillin Multiple reaction monitoring (MRM) transitions 664-505 (Figure 5) and a graphic overview of AreaRatio vs. corrected AreaRatio from Meropenem MRM transitions 457-195 (Figure 6), calculated with Dilution Factor's from different Carbamazepine MRM's. In Figures 5 and 6, the leftmost bar of each sample, show the non-corrected measured area ratio. The three following bars for each sample, show the area ratio after correction for the dilution factor. Samples 4, 5, 6 and 7 were used as calibrators and have always the same volume (250 µL) (thus, the bars have the same height). Samples 1, 2 and 3 may be three exemplary and different samples of a patient(s) with different volumina (225 µL, 300 µL, 350 µL). The leftmost bars of these samples are different to the other bars of these samples which were corrected.

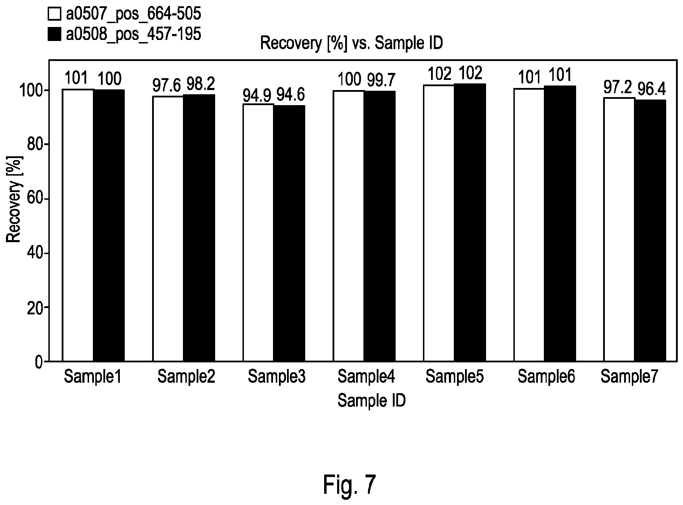

Figure 7 shows a recovery of each control sample to mean of the calibration samples, AreaRatio of control samples corrected using a dilution factor correction from MRM transition 237-165.

For the example of Figures 5 to 7, β-lactam antibiotics were quantified from serum. Given the nature of these analytes, ISTDa,b-pairs were selected that would show similar chromatographic retention time and therefore can be measured in close proximity to the analytes of interest. For the quantitation of these antibiotics from three varying sample volumes, carbamazepine and its isotopically labeled counterpart (carbamazepine ¹³C₆) were selected as a substance that can serve as an ISTDa,b-pair from which dilution correction factors may be calculated.

As dilution reagent water was used in which carbamazepine had been spiked (40 µg/mL). Eight calibration samples, consisting of serum (250 µL), comprising the analytes of interest (Table 2) were diluted with dilution reagent (250 µL). Furthermore, three control samples with known concentrations of the analytes, but varying volumes, were also diluted with dilution reagent (250 µL).

All samples were next placed on an analyzer capable of automatically processing and measuring all samples. With respect to further details for the processing reference is made to WO 2021/094410.

During measurement, for all compounds in Table 2, MRMs (Table 3) were measured. From the obtained areas, area ratios were calculated. From these ratios, dilution/concentration factors were calculated and analyte/ISTD ratios were calculated.

The following materials and methods were used. For dilution reagent, Carbamazepine was diluted to a concentration of 40 µg/mL with water. The mixture was prepared by mixing of Carbamazepine-¹³C₆ in the internal standard solution that also contained the internal standard for Piperacillin to obtain a concentration of 20 µg/mL.

For HPLC, a C-18 2.6 µM, 1.0x50 mm column was used. A Hitachi Cobas^{®} MS Analyzer was used for sample preparation and measurement. ULMI Sample with 200 µg/mL Piperacillin and 100 µg/mL Meropenem in human serum.

**Table 1. Preparation of the Samples, Samples 1-3 (Control samples with different sample volumes) and samples 5-7(calibration samples).**

| Sample No | Volume Sample [µL] | Volume Dilution Reagent [µL] |
|---|---|---|
| 1 | 225 | 250 |
| 2 | 300 | 250 |
| 3 | 350 | 250 |
| 4 | 250 | 250 |
| 5 | 250 | 250 |
| 6 | 250 | 250 |
| 7 | 250 | 250 |

Sample preparation was performed by dilution of a serum sample with a dilution reagent (see Table 1). Measurement workflow and reagents were adapted from WO 2021/094410, the ISTD-Mix, in which20 µg/mL Carbamazepine-¹³C₆ was added and MRM Channels (addition of three channels for Carbamazepine and three channels for Carbamazepine-¹³C₆) were modified. Each Sample was measured in five replicates.

**Table 2. Analytes of interest**

| Analyt No. | Analyte Name |
|---|---|
| 1 | Piperacillin |
| 2 | Meropenem |
| 3 | Carbamazepine |

**Table 3. Used MRMs**

| Analyte No. | MRM | MeasureMass1 | MeasureMass2 |
|---|---|---|---|
| 1 | 664-505 | 664.348 | 505.2 |
| | 669-510 | 669.38 | 510.2 |
| | 664-375 | 664.348 | 375.1 |
| | 669-380 | 669.38 | 380.1 |
| 2 | 457-195 | 457.248 | 195.2 |
| | 466-204 | 466.304 | 204.2 |
| | 457-413 | 457.248 | 413.2 |
| | 466-422 | 466.304 | 422.2 |
| 3 | 237-165 | 237.102 | 165.07 |
| | 237-179 | 237.102 | 179.073 |
| | 237-192 | 237.102 | 192.081 |
| | 243-185 | 243.122 | 185.093 |
| | 243-198 | 243.122 | 198.101 |
| | 243-171 | 243.122 | 171.09 |

After the measurement, all results for all MRMs were integrated and AreaRatios were calculated. $AreaRatio = \frac{Analyte \left(Area\right)}{ISTD \left(Area\right)}$

As next step, for each MRM of Analyte 3 for the Calibration samples 4 - 7 the mean AreaRatio of each sample was calculated. $Mean \left(AreaRatio\right) Sample No .4 = \frac{AreaRatio N 1 + AreaRatio N 2 … + AreaRatio N 5}{Number of Replicates \left(n=5\right)}$

Following this, for each MRM of Analyte 3 a correction factor was calculated by calculating the total mean of all mean AreaRatio for all Calibrations Samples. $Correction Factor = \frac{Mean \left(AreaRatio\right) Sample No .4 … + Mean \left(AreaRatio\right) Sample No .7}{Number of Calibration Samples \left(n=4\right)}$

As next step, a dilution factor was calculated: $Dilution Factor = \frac{Mean Sample \times \left(AreaRatio\right) Analyte MRM 1}{Correction Factor}$

After these steps, the dilution factor of each sample was multiplied with AreaRatio of Piperacillin and Meropenem for each determination of the corresponding sample. $corrected AreaRatio = AreaRatio \left(Sample X\right) ∗ Dilution Factor \left(Sample X\right)$ $Recovery \left[%\right] = \frac{corrected AreaRatio of Sample X}{Mean \left(AreaRatio\right) Sample No .4 - 7} ∗ 100$

The following results were obtained: As expected, both analytes showing the same results. Mean [AreaRatio] is the unchanged value and as seen in Figure 5 and 6 and also in Table 4 for the control samples (No. 1 - 3) an increase of the AreaRatio, depending on how much sample volume (ratio of sample volume/dilution reagent volume) was used for dilution, is clearly visible. By applying the dilution factor to the AreaRatio of the different samples the results for all samples are nearly the same, so the effect of the "unkown" volume of sample is eliminated. Table 5 shows the coefficient of variation (CV) of the control samples (No. 1 - 3) for AreaRatio and corrected AreaRatio's, Uncorrected AreaRatio show a CV of 19 - 20 % for both analytes, because of the different dilutions. The corrected AreaRatio's show CV's < 5 % for Meropenem and < 6 % for Piperacillin. Recovery of corrected AreaRatios of the control samples to mean of the uncorrected AreaRatios from the calibration samples is in a range of +/- 5 % and CVs < 3 % for both analytes, showing good trueness and high precision of this method.

The presented data show the validity of this method for quantifying an analyte concentration from an unknown sample volume.

**Table 4. Results for Meropenem MRM 457-195 and Piperacillin MRM 664-505, Mean [AreaRatio] is unchanged, all other AreaRatio's corrected through Dilution Factor of different Carbamazepine MRM's.**

| | Meropenem | | | | |
|---|---|---|---|---|---|
| Sample ID | Mean [AreaRatio] | Mean [AreaRatio * DF 237-165] | Mean [AreaRatio * DF 237-1791 | Mean [AreaRatio * DF 237-192] | CV [%] |
| Sample 1 | 2.22 | 2.94 | 2.89 | 2.89 | 1.46 |
| Sample2 | 3.05 | 3.22 | 3.20 | 3.17 | 0.42 |
| Sample3 | 3.49 | 3.16 | 3.17 | 3.18 | 1.70 |
| Sample4 | 3.71 | 3.05 | 3.05 | 3.11 | 1.41 |
| Sample5 | 3.19 | 3.21 | 3.23 | 3.20 | 2.63 |
| Sample6 | 3.27 | 3.29 | 3.29 | 3.30 | 0.61 |
| Sample7 | 3.24 | 3.27 | 3.23 | 3.25 | 1.69 |

| | Piperacillin | | | | |
|---|---|---|---|---|---|
| Sample ID | Mean [AreaRatio] | Mean [AreaRatio * DF 237-165] | Mean [AreaRatio * DF 237-179] | Mean [AreaRatio * DF 237-192] | CV [%] |
| Sample1 | 3.73 | 4.95 | 4.87 | 4.86 | 2.90 |
| Sample2 | 5.33 | 5.63 | 5.60 | 5.54 | 1.41 |
| Sample3 | 6.02 | 5.46 | 5.48 | 5.49 | 1.32 |
| Sample4 | 6.48 | 5.32 | 5.32 | 5.43 | 2.15 |
| Sample5 | 5.56 | 5.60 | 5.63 | 5.58 | 1.04 |
| Sample6 | 5.67 | 5.71 | 5.71 | 5.72 | 1.19 |
| Sample7 | 5.60 | 5.65 | 5.59 | 5.62 | 0.55 |

**Table 5. CV's of control samples (No. 1 - 4)**

| | CV [%] AreaRatio | CV [%] AreaRatio * DF 237-165 | CV [%] AreaRatio * DF 237-179 | CV [%] AreaRatio * DF 237-192 |
|---|---|---|---|---|
| Meropenem | 18.58 | 3.75 | 4.24 | 4.07 |
| Piperacillin | 19.63 | 5.13 | 5.63 | 5.55 |

**Table 6. Recovery of control samples 1-3 and calibration samples 4-7, calculated by the mean AreaRatio of calibration samples.**

| | Meropenem | | Piperacillin | |
|---|---|---|---|---|
| Sample ID | Recovery [%] | CV [%] | Recovery [%] | CV [%] |
| Sample1 | 100.14 | 0.42 | 100.60 | 1.41 |
| Sample2 | 98.24 | 1.70 | 97.58 | 1.32 |
| Sample3 | 94.64 | 1.41 | 94.91 | 2.15 |
| Sample4 | 99.65 | 2.63 | 99.97 | 1.04 |
| Sample5 | 102.20 | 0.61 | 101.98 | 1.19 |
| Sample6 | 101.44 | 1.69 | 100.82 | 0.55 |
| Sample7 | 96.37 | 2.98 | 97.19 | 2.45 |

### List of reference numbers

- 110: in vitro diagnostic medical device
- 112: sample preparation unit
- 115: analyte
- 118: first internal standard ISTDa
- 120: sample preparation workflow
- 124: second internal standard ISTDb
- 126: measurement unit
- 128: calibration sample
- 130: processing device
- 131: ARₛₐₘₚₗₑ of ISTDa and ISTDb
- 132: deviation
- 133: averaged area ratio AR_{calibration,av}
- 134: mass spectrometry device
- 135: sample
- 136: step a) of the method for determining a dilution factor of a sample
- 138: step b) of the method for determining a dilution factor of a sample
- 140: step c) of the method for determining a dilution factor of a sample
- 142: step d) of the method for determining a dilution factor of a sample
- 144: step e) of the method for determining a dilution factor of a sample
- 145: lysis and/or derivatization reagent
- 146: third internal standard ISTDanalyte
- 148: area ratio of ISTDa and ISTDb for calibration sample
- 150: experimental data
- 152: diagram
- 154: whole blood
- 156: step i) of the method for determining a concentration of an analyte
- 158: step ii) of the method for determining a concentration of an analyte
- 160: step iii) of the method for determining a concentration of an analyte
- 162: step iv) of the method for determining a concentration of an analyte
- 164: vial
- 166: assay cup
- 168: bead purification and measurement

## Claims

1. A method for determining a dilution factor of a sample comprising an analyte (115) of interest, the method comprises the following steps:
a) (136) preparing a mixture by diluting defined volumes of calibrators comprising the analyte (115) of interest with a defined volume of a dilution reagent comprising at least one first internal standard ISTDa (118);
b) (138) performing at least one sample preparation workflow (120) on a defined volume of the mixture thereby generating a prepared mixture, wherein the sample preparation workflow (120) comprises adding at least one second internal standard ISTDb (124);
c) (140) performing at least one sample measurement on the prepared mixture comprising determining a peak area for each of the first internal standard ISTDa (118) and the second internal standard ISTDb (124) using an in vitro diagnostic medical device (110) and determining an area ratio ARₛₐₘₚₗₑ of ISTDa (118) and ISTDb (124) by using at least one processing device (130);
d) (142) performing at least one calibration measurement on a plurality of calibration samples (128), wherein the calibration samples (128) have a predefined concentration of ISTDa (118) and ISTDb (124), and determining an averaged area ratio AR-_{calibration,av} of ISTDa (118) and ISTDb (124) of the calibration samples (128) by using the processing device (130);
e) (144) determining the dilution factor by determining a deviation of the area ratio ARₛₐₘₚₗₑ and the averaged area ratio AR_{calibration,av} by using the processing device (130).

2. The method according to the preceding claim, wherein the dilution reagent comprises at least one lysis and/or derivatization reagent, comprising one or more inert first internal standard ISTDa (118) that are unrelated to the analyte (115).

3. The method according to any one of the preceding claims, wherein the second internal standard ISTDb (124) is an isotope-labelled molecule of the first internal standard ISTDa (118) or a compound with similar chemo physical properties to the first internal standard ISTDa (118).

4. The method according to any one of the preceding claims, wherein the internal standards ISTDa (118) and ISTDb (124) have similar properties in at least one molecular descriptor, wherein the molecular descriptor is one or more of polar surface area, number of hydrogen bond acceptors and donors, ionizable groups, permanent charges, size.

5. The method according to any one of the preceding claims, wherein the first internal standard ISTDa (118) and the second internal standard ISTDb (124) are unrelated compounds to the analyte, and/or wherein the internal standards ISTDa (118) and ISTDb (124) have similar properties to the analyte (115) depending on the sample preparation, optionally type of purification, and ionization properties.

6. The method according to any one of the preceding claims, wherein the method comprises using a plurality of pairs of first internal standards ISTDa (118) and second internal standards ISTDb (124).

7. The method according to any one of the preceding claims, wherein the sample preparation workflow (120) comprises sample purification and/or sample dilution and/or sample concentration.

8. The method according to any one of the preceding claims, wherein the averaged area ratio AR_{calibration,av} is determined by ${AR}_{calibration , av} = \frac{1}{n ⋅ z} {\sum }_{i = 1}^{z} {\sum }_{j = 1}^{n} \frac{{ISTDa}_{ij}}{{ISTDb}_{ij}} ,$ with z being the number of calibration samples and n being the number of pairs of first internal standard (118) and second internal standard (124), wherein the deviation Δ of the area ratio ARₛₐₘₚₗₑ and the averaged area ratio AR_{calibration,av} is determined by $Δ = \frac{\frac{1}{z} {\sum }_{i = 1}^{z} {\sum }_{j = 1}^{n} \frac{{ISTDa}_{ij}}{{ISTDb}_{ij}}}{{\sum }_{j = 1}^{n} \frac{{ISTDa}_{j}}{{ISTDb}_{j}}} .$

9. The method according to any one of the preceding claims, wherein the in vitro diagnostic medical device (110) is a mass spectrometry device.

10. A method for determining a concentration of an analyte of interest in a sample, the method comprises the following steps:
i) (156) determining a dilution factor using a method for determining a dilution factor according to any one of the preceding claims, wherein the sample preparation workflow (120) comprises adding a third internal standard ISTDanalyte (146) which accounts for the analyte (115), wherein the sample measurement further comprises determining a peak area for the analyte (115) of interest and the third internal standard ISTDanalyte (146) by using the processing device (130),
ii) (158) determining an area ratio of the analyte (115) and the third internal standard ISTDanalyte (146) by using the processing device (130);
iii) (160) correcting, by using the processing device (130), the area ratio of the analyte (115) and the third internal standard ISTDanalyte (146) by using the dilution factor;
iv) (162) determining the analyte concentration from the corrected area ratio by using the processing device (130).

11. The method according to the preceding claim, wherein the method comprises at least one calibration step, wherein the calibration step comprises determining a relationship between an area ratio and the analyte concentration.

12. A computer program comprising instructions which, when the program is executed by a processing device, cause the processing device to perform one or more of the methods according to any one of the preceding claims.

13. A computer-readable storage medium comprising instructions which, when the instructions are executed by the processing device, cause the processing device to perform the one or more of the methods according to any one of the preceding claims referring to a method.

14. A non-transient computer-readable medium including instructions that, when executed by one or more processors, cause the one or more processors to perform one or more of the methods according to any one of the preceding claims referring to a method.

15. An in vitro diagnostic medical device (110) comprising
- at least one sample preparation unit (112) configured for preparing a mixture by diluting defined volumes of calibrators comprising an analyte (115) of interest with a defined volume of a dilution reagent comprising at least one first internal standard ISTDa (118), wherein the sample preparation unit (112) is configured for performing at least one sample preparation workflow (120) on a defined volume of the mixture thereby generating a prepared mixture, wherein the sample preparation workflow (120) comprises adding at least one second internal standard ISTDb (124);
- at least one measurement unit (126) configured for performing at least one in vitro diagnostic measurement, wherein the measurement unit (126) is configured for performing at least one sample measurement on the prepared mixture, wherein the measurement unit (126) is further configured for performing at least one calibration measurement on a plurality of calibration samples (128), wherein the calibration samples (128) have a predefined concentration of ISTDa (118) and ISTDb (124);
- at least one processing device (130) configured for determining a peak area for each of the first internal standard ISTDa (118) and the second internal standard ISTDb (124), determining an area ratio ARₛₐₘₚₗₑ of ISTDa (118) and ISTDb (124) and for determining an averaged area ratio AR_{calibration,av} of ISTDa (118) and ISTDb (124) of the calibration samples (128), wherein the processing device (130) is configured for determining a dilution factor by determining a deviation of the area ratio ARₛₐₘₚₗₑ and the averaged area ratio AR_{calibration,av}.

## Patentansprüche

1. Verfahren zur Bestimmung eines Verdünnungsfaktors einer Probe, die einen Analyten (115) von Interesse umfasst, wobei das Verfahren die folgenden Schritte umfasst:
a) (136) Herstellen einer Mischung durch Verdünnen definierter Volumina von Kalibratoren, die den Analyten (115) von Interesse umfassen, mit einem definierten Volumen eines Verdünnungsreagens, das mindestens einen ersten internen Standard ISTDa (118) umfasst;
b) (138) Durchführen mindestens eines Probenherstellungsarbeitsablaufs (120) an einem definierten Volumen der Mischung, wodurch eine hergestellte Mischung erzeugt wird, wobei der Probenherstellungsarbeitsablauf (120) das Hinzufügen mindestens eines zweiten internen Standards ISTDb (124) umfasst;
c) (140) Durchführen mindestens einer Probenmessung an der hergestellten Mischung, umfassend das Bestimmen einer Peakfläche für jeden des ersten internen Standards ISTDa (118) und des zweiten internen Standards ISTDb (124) unter Verwendung einer medizinischen In-vitro-Diagnosevorrichtung (110) und das Bestimmen eines Flächenverhältnisses AR_{Probe} von ISTDa (118) und ISTDb (124) unter Verwendung mindestens einer Verarbeitungsvorrichtung (130);
d) (142) Durchführen mindestens einer Kalibrierungsmessung an einer Vielzahl von Kalibrierungsproben (128), wobei die Kalibrierungsproben (128) eine vordefinierte Konzentration von ISTDa (118) und ISTDb (124) aufweisen, und Bestimmen eines gemittelten Flächenverhältnisses AR-_{Kalibrierung,av} von ISTDa (118) und ISTDb (124) der Kalibrierungsproben (128) unter Verwendung der Verarbeitungsvorrichtung (130);
e) (144) Bestimmen des Verdünnungsfaktors durch Bestimmen einer Abweichung des Flächenverhältnisses AR_{Probe} und des gemittelten Flächenverhältnisses AR_{Kalibrierung,av} unter Verwendung der Verarbeitungsvorrichtung (130).

2. Verfahren nach dem vorhergehenden Anspruch, wobei das Verdünnungsreagens mindestens ein Lyse- und/oder Derivatisierungsreagens umfasst, das einen oder mehrere inerte erste interne Standards ISTDa (118) umfasst, die nicht mit dem Analyten (115) in Beziehung stehen.

3. Verfahren nach einem der vorhergehenden Ansprüche, wobei der zweite interne Standard ISTDb (124) ein isotopenmarkiertes Molekül des ersten internen Standards ISTDa (118) oder eine Verbindung mit ähnlichen chemophysikalischen Eigenschaften wie der erste interne Standard ISTDa (118) ist.

4. Verfahren nach einem der vorhergehenden Ansprüche, wobei die internen Standards ISTDa (118) und ISTDb (124) ähnliche Eigenschaften bezüglich mindestens eines Moleküldeskriptors aufweisen, wobei der Moleküldeskriptor eines oder mehrere aus polarer Oberfläche, Anzahl von Wasserstoffbindungsakzeptoren und -donatoren, ionisierbaren Gruppen, permanenten Ladungen, Größe ist.

5. Verfahren nach einem der vorhergehenden Ansprüche, wobei der erste interne Standard ISTDa (118) und der zweite interne Standard ISTDb (124) nicht mit dem Analyten in Beziehung stehende Verbindungen sind und/oder wobei die internen Standards ISTDa (118) und ISTDb (124) ähnliche Eigenschaften wie der Analyt (115) aufweisen, in Abhängigkeit von der Probenherstellung, gegebenenfalls Art der Reinigung und Ionisierungseigenschaften.

6. Verfahren nach einem der vorhergehenden Ansprüche, wobei das Verfahren das Verwenden einer Vielzahl von Paaren von ersten internen Standards ISTDa (118) und zweiten internen Standards ISTDb (124) umfasst.

7. Verfahren nach einem der vorhergehenden Ansprüche, wobei der Probenherstellungsarbeitsablauf (120) Probenreinigung und/oder Probenverdünnung und/oder Probeneinengung umfasst.

8. Verfahren nach einem der vorhergehenden Ansprüche, wobei das gemittelte Flächenverhältnis AR_{Kalibrierung,av} folgendermaßen bestimmt wird: ${AR}_{Kalibrierung , av} = \frac{1}{n ⋅ z} {\sum }_{i = 1}^{z} {\sum }_{j = 1}^{n} \frac{{ISTDa}_{ij}}{{ISTDb}_{ij}} ,$ wobei z die Anzahl von Kalibrierungsproben ist und n die Anzahl von Paaren von erstem internem Standard (118) und zweitem internem Standard (124) ist, wobei die Abweichung Δ des Flächenverhältnisses AR_{Probe} und des gemittelten Flächenverhältnisses AR_{Kalibrierung,av} folgendermaßen bestimmt wird: $Δ = \frac{\frac{1}{z} {\sum }_{i = 1}^{z} {\sum }_{j = 1}^{n} \frac{{ISTDa}_{ij}}{{ISTDb}_{ij}}}{{\sum }_{j = 1}^{n} \frac{{ISTDa}_{j}}{{ISTDb}_{j}}} .$

9. Verfahren nach einem der vorhergehenden Ansprüche, wobei die medizinische In-vitro-Diagnosevorrichtung (110) eine Massenspektrometrievorrichtung ist.

10. Verfahren zum Bestimmen einer Konzentration eines Analyten von Interesse in einer Probe, wobei das Verfahren die folgenden Schritte umfasst:
i) (156) Bestimmen eines Verdünnungsfaktors unter Verwendung eines Verfahrens zum Bestimmen eines Verdünnungsfaktors nach einem der vorhergehenden Ansprüche, wobei der Probenherstellungsarbeitsablauf (120) das Hinzufügen eines dritten internen Standards ISTDAnalyt (146) umfasst, der den Analyten (115) berücksichtigt, wobei die Probenmessung ferner das Bestimmen einer Peakfläche für den Analyten (115) von Interesse und den dritten internen Standard ISTDAnalyt (146) unter Verwendung der Verarbeitungsvorrichtung (130) umfasst,
ii) (158) Bestimmen eines Flächenverhältnisses des Analyten (115) und des dritten internen Standards ISTDAnalyt (146) unter Verwendung der Verarbeitungsvorrichtung (130);
iii) (160) Korrigieren, unter Verwendung der Verarbeitungsvorrichtung (130), des Flächenverhältnisses des Analyten (115) und des dritten internen Standards ISTD_{Analyt} (146) unter Verwendung des Verdünnungsfaktors;
iv) (162) Bestimmen der Analytkonzentration aus dem korrigierten Flächenverhältnis unter Verwendung der Verarbeitungsvorrichtung (130).

11. Verfahren nach dem vorhergehenden Anspruch, wobei das Verfahren mindestens einen Kalibrierungsschritt umfasst, wobei der Kalibrierungsschritt das Bestimmen einer Beziehung zwischen einem Flächenverhältnis und der Analytkonzentration umfasst.

12. Computerprogramm, umfassend Anweisungen, die, wenn das Programm von einer Verarbeitungsvorrichtung ausgeführt wird, die Verarbeitungsvorrichtung veranlassen, eines oder mehrere der Verfahren nach einem der vorhergehenden Ansprüche durchzuführen.

13. Computerlesbares Speichermedium, umfassend Anweisungen, die, wenn die Anweisungen von der Verarbeitungsvorrichtung ausgeführt werden, die Verarbeitungsvorrichtung veranlassen, das eine oder die mehreren der Verfahren nach einem der vorhergehenden Ansprüche, die sich auf ein Verfahren beziehen, durchzuführen.

14. Nichtflüchtiges computerlesbares Medium, umfassend Anweisungen, die, wenn sie von einem oder mehreren Prozessoren ausgeführt werden, den einen oder die mehreren Prozessoren veranlassen, eines oder mehrere der Verfahren nach einem der vorhergehenden Ansprüche, die sich auf ein Verfahren beziehen, durchzuführen.

15. Medizinische In-vitro-Diagnosevorrichtung (110), umfassend
- mindestens eine Probenherstellungseinheit (112), die zum Herstellen einer Mischung durch Verdünnen definierter Volumina von Kalibratoren, die einen Analyten (115) von Interesse umfassen, mit einem definierten Volumen eines Verdünnungsreagens konfiguriert ist, das mindestens einen ersten internen Standard ISTDa (118) umfasst, wobei die Probenherstellungseinheit (112) zum Durchführen mindestens eines Probenherstellungsarbeitsablaufs (120) an einem definierten Volumen der Mischung konfiguriert ist, wodurch eine hergestellte Mischung erzeugt wird, wobei der Probenherstellungsarbeitsablauf (120) das Hinzufügen mindestens eines zweiten internen Standards ISTDb (124) umfasst;
- mindestens eine Messeinheit (126), die zum Durchführen mindestens einer diagnostischen In-vitro-Messung konfiguriert ist, wobei die Messeinheit (126) zum Durchführen mindestens einer Probenmessung an der hergestellten Mischung konfiguriert ist, wobei die Messeinheit (126) ferner zum Durchführen mindestens einer Kalibrierungsmessung an einer Vielzahl von Kalibrierungsproben (128) konfiguriert ist, wobei die Kalibrierungsproben (128) eine vordefinierte Konzentration von ISTDa (118) und ISTDb (124) aufweisen;
- mindestens eine Verarbeitungsvorrichtung (130), die zum Bestimmen einer Peakfläche für jeden des ersten internen Standards ISTDa (118) und des zweiten internen Standards ISTDb (124), zum Bestimmen eines Flächenverhältnisses AR_{Probe} von ISTDa (118) und ISTDb (124) und zum Bestimmen eines gemittelten Flächenverhältnisses AR_{Kalibrierung,av} von ISTDa (118) und ISTDb (124) der Kalibrierungsproben (128) konfiguriert ist, wobei die Verarbeitungsvorrichtung (130) zum Bestimmen eines Verdünnungsfaktors durch Bestimmen einer Abweichung des Flächenverhältnisses AR_{Probe} und des gemittelten Flächenverhältnisses AR_{Kalibrierung,av} konfiguriert ist.

## Revendications

1. Procédé de détermination d'un facteur de dilution d'un échantillon comprenant un analyte (115) d'intérêt, le procédé comprend les étapes suivantes :
a) (136) préparation d'un mélange en diluant des volumes définis d'étalons comprenant l'analyte (115) d'intérêt avec un volume défini d'un réactif de dilution comprenant au moins un premier étalon interne ISTDa (118) ;
b) (138) réalisation d'au moins un processus de préparation d'échantillon (120) sur un volume défini du mélange générant ainsi un mélange préparé, le processus de préparation d'échantillon (120) comprenant l'ajout d'au moins un deuxième étalon interne ISTDb (124) ;
c) (140) réalisation d'au moins une mesure d'échantillon sur le mélange préparé comprenant la détermination d'une aire de pic pour chacun du premier étalon interne ISTDa (118) et du deuxième étalon interne ISTDb (124) en utilisant un dispositif médical de diagnostic in vitro (110) et la détermination d'un rapport d'aires AR_{échantillon} d'ISTDa (118) et d'ISTDb (124) en utilisant au moins un dispositif de traitement (130) ;
d) (142) réalisation d'au moins une mesure d'étalonnage sur une pluralité d'échantillons d'étalonnage (128), les échantillons d'étalonnage (128) ayant une concentration prédéfinie d'ISTDa (118) et d'ISTDb (124), et détermination d'un rapport d'aires moyenné AR_{étalonnage,moy} d'ISTDa (118) et d'ISTDb (124) des échantillons d'étalonnage (128) en utilisant le dispositif de traitement (130) ;
e) (144) détermination du facteur de dilution en déterminant un écart du rapport d'aires AR_{échantillon} et du rapport d'aires moyenné AR_{étalonnage,moy} en utilisant le dispositif de traitement (130).

2. Procédé selon la revendication précédente, dans lequel le réactif de dilution comprend au moins un réactif de lyse et/ou de dérivation, comprenant un ou plusieurs premiers étalons internes ISTDa (118) inertes qui ne sont pas apparentés à l'analyte (115).

3. Procédé selon l'une quelconque des revendications précédentes, dans lequel le deuxième étalon interne ISTDb (124) est une molécule marquée par isotope du premier étalon interne ISTDa (118) ou un composé avec des propriétés physico-chimiques similaires à celles du premier étalon interne ISTDa (118).

4. Procédé selon l'une quelconque des revendications précédentes, dans lequel les étalons internes ISTDa (118) et ISTDb (124) ont des propriétés similaires dans au moins un descripteur moléculaire, dans lequel le descripteur moléculaire est un ou plusieurs parmi une aire de surface polaire, un nombre d'accepteurs et de donneurs de liaisons hydrogène, des groupes ionisables, des charges permanentes, une taille.

5. Procédé selon l'une quelconque des revendications précédentes, dans lequel le premier étalon interne ISTDa (118) et le deuxième étalon interne ISTDb (124) sont des composés non apparentés à l'analyte, et/ou dans lequel les étalons internes ISTDa (118) et ISTDb (124) ont des propriétés similaires à celles de l'analyte (115) en fonction de la préparation d'échantillon, éventuellement du type de purification et des propriétés d'ionisation.

6. Procédé selon l'une quelconque des revendications précédentes, dans lequel le procédé comprend l'utilisation d'une pluralité de paires de premiers étalons internes ISTDa (118) et de deuxièmes étalons internes ISTDb (124).

7. Procédé selon l'une quelconque des revendications précédentes, dans lequel le processus de préparation d'échantillon (120) comprend la purification d'échantillon et/ou la dilution d'échantillon et/ou la concentration d'échantillon.

8. Procédé selon l'une quelconque des revendications précédentes, dans lequel le rapport d'aires moyenné AR_{étalonnage,moy} est déterminé par ${AR}_{é talonnage , moy} = \frac{1}{n ⋅ z} {\sum }_{i = 1}^{z} {\sum }_{j = 1}^{n} \frac{{ISTDa}_{ij}}{{ISTDb}_{ij}} ,$ z étant le nombre d'échantillons d'étalonnage et n étant le nombre de paires du premier étalon interne (118) et du deuxième étalon interne (124), dans lequel l'écart Δ du rapport d'aires AR_{échantillon} et du rapport d'aires moyenné AR_{étalonnage,moy} est déterminé par $Δ = \frac{\frac{1}{z} {\sum }_{i = 1}^{z} {\sum }_{j = 1}^{n} \frac{{ISTDa}_{ij}}{{ISTDb}_{ij}}}{{\sum }_{j = 1}^{n} \frac{{ISTDa}_{j}}{{ISTDb}_{j}}} .$

9. Procédé selon l'une quelconque des revendications précédentes, dans lequel le dispositif médical de diagnostic in vitro (110) est un dispositif de spectrométrie de masse.

10. Procédé de détermination d'une concentration d'un analyte d'intérêt dans un échantillon, le procédé comprend les étapes suivantes :
i) (156) détermination d'un facteur de dilution en utilisant un procédé de détermination d'un facteur de dilution selon l'une quelconque des revendications précédentes, le processus de préparation d'échantillon (120) comprenant l'ajout d'un troisième étalon interne ISTDanalyte (146) qui prend en compte l'analyte (115), la mesure d'échantillon comprenant en outre la détermination d'une aire de pic pour l'analyte (115) d'intérêt et le troisième étalon interne ISTDanalyte (146) en utilisant le dispositif de traitement (130),
ii) (158) détermination d'un rapport d'aires de l'analyte (115) et du troisième étalon interne ISTDanalyte (146) en utilisant le dispositif de traitement (130) ;
iii) (160) correction, en utilisant le dispositif de traitement (130), du rapport d'aires de l'analyte (115) et du troisième étalon interne ISTDanalyte (146) en utilisant le facteur de dilution ;
iv) (162) détermination de la concentration de l'analyte à partir du rapport d'aires corrigé en utilisant le dispositif de traitement (130).

11. Procédé selon la revendication précédente, dans lequel le procédé comprend au moins une étape d'étalonnage, dans lequel l'étape d'étalonnage comprend la détermination d'une relation entre un rapport d'aires et la concentration de l'analyte.

12. Programme informatique comprenant des instructions qui, lorsque le programme est exécuté par un dispositif de traitement, amènent le dispositif de traitement à réaliser un ou plusieurs des procédés selon l'une quelconque des revendications précédentes.

13. Support de stockage lisible par ordinateur comprenant des instructions qui, lorsque les instructions sont exécutées par le dispositif de traitement, amènent le dispositif de traitement à réaliser le ou les procédés selon l'une quelconque des revendications précédentes se référant à un procédé.

14. Support lisible par ordinateur non transitoire comprenant des instructions qui, lorsqu'elles sont exécutées par un ou plusieurs processeurs, amènent le ou les processeurs à réaliser un ou plusieurs des procédés selon l'une quelconque des revendications précédentes se référant à un procédé.

15. Dispositif médical de diagnostic in vitro (110) comprenant
- au moins une unité de préparation d'échantillon (112) configurée pour préparer un mélange en diluant des volumes définis d'étalons comprenant un analyte (115) d'intérêt avec un volume défini d'un réactif de dilution comprenant au moins un premier étalon interne ISTDa (118), l'unité de préparation d'échantillon (112) étant configurée pour réaliser au moins un processus de préparation d'échantillon (120) sur un volume défini du mélange générant ainsi un mélange préparé, le processus de préparation d'échantillon (120) comprenant l'ajout d'au moins un deuxième étalon interne ISTDb (124) ;
- au moins une unité de mesure (126) configurée pour réaliser au moins une mesure de diagnostic in vitro, l'unité de mesure (126) étant configurée pour réaliser au moins une mesure d'échantillon sur le mélange préparé, l'unité de mesure (126) étant en outre configurée pour réaliser au moins une mesure d'étalonnage sur une pluralité d'échantillons d'étalonnage (128), les échantillons d'étalonnage (128) ayant une concentration prédéfinie d'ISTDa (118) et d'ISTDb (124) ;
- au moins un dispositif de traitement (130) configuré pour déterminer une aire de pic pour chacun du premier étalon interne ISTDa (118) et du deuxième étalon interne ISTDb (124), déterminant un rapport d'aires AR_{échantillon} d'ISTDa (118) et d'ISTDb (124) et pour déterminer un rapport d'aires moyenné AR_{étalonnage,moy} d'ISTDa (118) et d'ISTDb (124) des échantillons d'étalonnage (128), le dispositif de traitement (130) étant configuré pour déterminer un facteur de dilution en déterminant un écart du rapport d'aires AR_{échantillon} et du rapport d'aires moyenné AR_{étalonnage,moy}.
